# EUROPEAN PATENT SPECIFICATION

(11) **EP 3 893 137 B1**
(45) Date of publication and mention of the grant of the patent: **20.03.2024**
(21) Application number: 21190440.4
(22) Date of filing: 09.08.2021
(51) Int. Cl.: G06F 21/64, G06F 21/53, H04L 9/40, H04L 9/00, G06F 9/455, H04L 9/32

(54) **EVM-BASED TRANSACTION PROCESSING METHOD AND APPARATUS, DEVICE, PROGRAM AND MEDIUM**
EVM-BASIERTES VERFAHREN, VORRICHTUNG, ANORDNUNG, COMPUTERPROGRAMM UND SPEICHERMEDIUM ZUR VERARBEITUNG VON TRANSAKTIONEN
PROCÉDÉ, APPAREIL, DISPOSITIF, PROGRAMME ET SUPPORT DE TRAITEMENT DE TRANSACTIONS BASÉS SUR EVM

(30) Priority: 24.12.2020 CN 202011547864
(43) Date of publication of application: 13.10.2021
(73) Proprietor: Beijing Baidu Netcom Science and Technology Co., Ltd., Beijing 100085 (CN)
(72) Inventor: ZHANG, Lei, BEIJING, 100085 (CN); FAN, Bingxin, BEIJING, 100085 (CN); ZHENG, Qi, BEIJING, 100085 (CN); XIAO, Wei, BEIJING, 100085 (CN)
(74) Representative: Regimbeau

(56) References cited:
- CN-A- 110 297 689
- CN-A- 110 321 374
- CN-A- 111 741 026

## Description

### TECHNICAL FIELD

The present disclosure relates to the field of computer technologies and, in particular, blockchain technologies. Specifically, the present disclosure relates to an Ethereum Virtual Machine-based transaction processing method and apparatus, a device, a program and a medium.

### BACKGROUND

A blockchain is a new application mode of computer technologies such as distributed data storage, point-to-point transmission, a consensus mechanism and an encryption algorithm. Because of being public, transparent and non-tamperable, the blockchain is more and more widely applied in the fields of finance, traceability, insurance and the like.

Blockchain technologies are continuously developed from the earliest bitcoin system to Ethereum. In recent years, many blockchain systems using better technologies have emerged gradually, for example, new blockchain technologies based on the Proof of Stake (PoS) consensus mechanism, such as Polkadot and Cosmos. In the field of blockchain applications, regardless of continuously upgraded and updated technologies, the ecological environment based on Ethereum technologies has already possessed a certain scale. Many blockchain applications are constructed based on smart contracts of Ethereum. Application developers and users are somewhat accustomed to using the smart contracts of Ethereum.

However, with technological progress, some deficiencies of Ethereum have been exposed, such as an inefficient consensus algorithm, so that the deal performance of Ethereum is insufficient to support large-scale commercial application scenarios. Considering the ecological effect of Ethereum, Ethereum cannot be directly discarded and a system capable of being compatible with Ethereum and other blockchain technologies is more in demand. The smart contracts of Ethereum are implemented based on Ethereum Virtual Machines (EVMs) so that the problem of migration of EVMs to another blockchain system needs to be addressed for compatibility with Ethereum and other blockchain technologies.

Further relevant technologies are also known from CN 111741026 A which relates to a cross-chain transaction request processing method and device, and CN 110321374 A which relates to a distributed network-based standard file IO operating system and method.

### SUMMARY

The present disclosure provides an Ethereum Virtual Machine-based transaction processing method and apparatus, a device, a program and a medium.

The invention is set out in the appended set of claims.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure. In the drawings:
FIG. 1 is a schematic diagram of an Ethereum Virtual Machine-based transaction processing method according to an embodiment of the present disclosure;
FIG. 2 is a schematic diagram of another Ethereum Virtual Machine-based transaction processing method according to an embodiment of the present disclosure;
FIG. 3 is a schematic diagram of another Ethereum Virtual Machine-based transaction processing method according to an embodiment of the present disclosure;
FIG. 4 is a schematic diagram of an Ethereum Virtual Machine-based transaction processing flow according to an embodiment of the present disclosure;
FIG. 5 is a schematic diagram of another Ethereum Virtual Machine-based transaction processing method according to an embodiment of the present disclosure;
FIG. 6 is a schematic diagram of an Ethereum Virtual Machine-based transaction processing apparatus according to an embodiment of the present disclosure; and
FIG. 7 is a block diagram of an electronic device for implementing an Ethereum Virtual Machine-based transaction processing method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Therefore, it will be appreciated by those having ordinary skill in the art that various changes and modifications may be made to the embodiments described herein without departing from the scope of the present disclosure. Similarly, description of well-known functions and constructions is omitted hereinafter for clarity and conciseness.

The blockchain is the new application mode of computer technologies such as the distributed data storage, the point-to-point transmission, the consensus mechanism and the encryption algorithm. A blockchain appearing earliest is an important concept of bitcoins and essentially a decentralized database. As an underlying technology of bitcoins, the blockchain is a series of data blocks generated in association with each other by using a cryptographic method, where each data block contains information about a batch of bitcoin network deals and is used for verifying the validity of the information and generating the next block. Because of being public, transparent and non-tamperable, the blockchain is more and more widely applied in the fields of finance, traceability, insurance and the like. In particular, the blockchain can achieve efficient cooperation between various financial institutions in the field of finance.

The blockchain technology appears earliest in the age of digital currency represented by bitcoins. With the continuous development of the blockchain technology, Ethereum combining the digital currency with smart contracts emerges. The blockchain is upgraded from an original "global ledger" to a "global computer" and is the decentralization of the entire market. Ethereum is an application that combines the digital currency with the smart contracts and optimizes a wider range of scenarios and flows in the field of finance. The biggest upgrade is the presence of smart contracts. Ethereum is located on an application platform on which the smart contracts can be uploaded and executed, and the execution of contracts can be effectively guaranteed.

Large-scale commercial application scenarios tend to be supported by an efficient consensus algorithm. However, the consensus of early blockchain technologies such as bitcoins and Ethereum results in insufficient deal performance to support these scenarios. In the field of blockchain applications, the ecology of Ethereum is of greatest significance, and thus many blockchain applications depend on the ecology of Ethereum. Not only CryptoKitties in the field of games but also Dai, a decentralized finance (DeFi) project, in the field of finance are constructed based on the smart contracts of Ethereum.

A virtual machine specifically used for executing the smart contracts of Ethereum is referred to as an Ethereum Virtual Machine (EVM). The smart contracts of Ethereum may be written in languages such as Solidity and Viper. The smart contracts of Ethereum and EVMs are widely applied in the field of blockchains and have become one of factual standards in the field of blockchain smart contracts.

If the EVM is applied in another blockchain system based on a modification of source codes of Ethereum, the EVM is inherently bound to a blockchain data storage mode and access mode so that a migration solution is not universal and the migrated EVM is more bound to the chain itself and difficult to be applicable to the migration of the EVM to another chain.

The present application provides an Ethereum Virtual Machine-based transaction processing method. A modular design is integrated and an Ethereum Virtual Machine is migrated as a module into a modular blockchain system, for example, a blockchain introducing the modular design, such as XuperChain and Cosmos so that block data is isolated from execution logics. The method in the embodiment of the present application can make full use of the technical ecology and application ecology of Ethereum, which greatly facilitates the migration of various decentralized applications (Dapps) in the ecology of Ethereum. Meanwhile, the method can also exploit the technical advantages of other blockchain systems to the full.

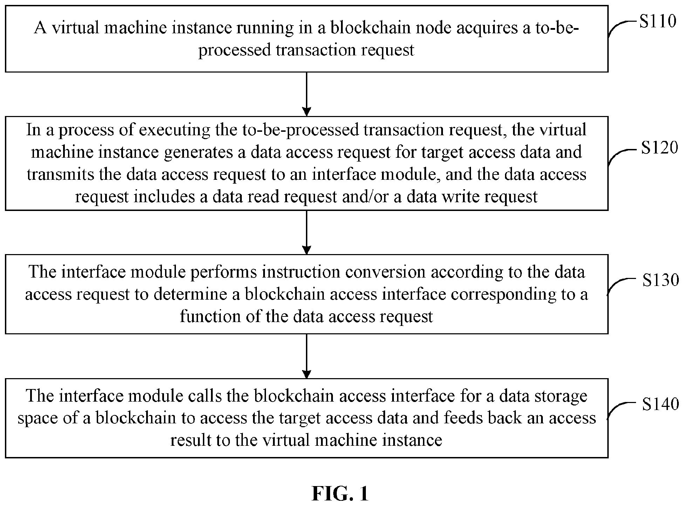

FIG. 1 is a schematic diagram of an Ethereum Virtual Machine-based transaction processing method according to an embodiment of the present application. This embodiment is applicable to the case where an Ethereum Virtual Machine is migrated to another blockchain system for transaction processing, so as to solve the problem of migration of the Ethereum Virtual Machine to another blockchain system and improve the compatibility with Ethereum and other non-Ethereum blockchain technologies. The Ethereum Virtual Machine-based transaction processing method disclosed in this embodiment may be executed by an Ethereum Virtual Machine-based transaction processing apparatus. The apparatus may be implemented by software and/or hardware and configured in an electronic device having computing and storage functions. The electronic device is a blockchain node. A blockchain network is a network composed of multiple blockchain nodes and running in a distributed mode. The method provided by the embodiment of the present application may be performed by any blockchain node.

Referring to FIG. 1, the Ethereum Virtual Machine-based transaction processing method provided in this embodiment includes steps described below.

In S 110, a virtual machine instance running in the blockchain node acquires a to-be-processed transaction request.

The blockchain node is deployed with a virtual machine program. In response to a running requirement, one or more virtual machine instances may be created for executing computing logics of a smart contract based on an instruction set of the Ethereum Virtual Machine.

The to-be-processed transaction request is a transaction request sent by another blockchain node or submitted by a user at the blockchain node for operations on data on a blockchain. In an embodiment of the present application, the transaction request may be any transaction request supported in the blockchain system and may be a business transaction request, a management transaction request or the like. The to-be-processed transaction request may be a data read request, a data write request or the like for the data on the blockchain.

After acquiring the to-be-processed transaction request, the blockchain node executes the to-be-processed transaction request by running the virtual machine instance.

In S 120, in a process of executing the to-be-processed transaction request, the virtual machine instance generates a data access request for target access data and transmits the data access request to an interface module. The data access request includes a data read request and/or a data write request.

In the embodiment of the present application, since a target blockchain system to which the virtual machine is migrated does not support blockchain data to be read and written through a virtual machine instruction, the interface module is provided to parse and convert the data access request expressed by the virtual machine instance through an instruction so that an interface capable of accessing the blockchain data is formed.

In the process of acquiring the to-be-processed transaction request and initiating execution, the virtual machine instance generally generates a requirement for reading/writing (accessing) the blockchain data. A data storage space for storing data is provided in the blockchain system. The data is divided into on-chain data and local data. The on-chain data refers to data added to blocks and stored by each node. The local data is data stored locally by each node according to the content of the on-chain data and a local index requirement. The local data stored by each node may be different. The target access data refers to data involved in the to-be-processed transaction request and may be on-chain data or local data. The data access request is a request for accessing the target access data.

The data access request includes the data read request and/or the data write request. The data read request refers to reading the target access data from the data storage space of the blockchain, and the data write request refers to writing the target access data into the data storage space of the blockchain.

The virtual machine instance of Ethereum has a set instruction set and generates an instruction to read/write data in the process of executing the to-be-processed transaction request, so as to express the data access request.

In S130, the interface module performs instruction conversion according to the data access request to determine a blockchain access interface corresponding to a function of the data access request.

The interface module is configured to perform the instruction parse and conversion on the data access request. The interface module is provided with multiple blockchain access interfaces for implementing various reading and writing functions for data in the data storage space. An interface is actually a program that is capable of performing data reading, writing, computing or the like once or more times and is also capable of calling another interface according to a set program.

Since the data access request generated by the virtual machine instance is in the form of an Ethereum Virtual Machine instruction and cannot be directly identified by a data storage system that does not support Ethereum, the interface module needs to perform the instruction conversion on a data access instruction.

Different data access requests differ in terms of operations on on-chain data in that functions corresponding to the data access requests are different. Therefore, different data access requests may correspond to different blockchain access interfaces. Specifically, when the data access requests are the data read request and the data write request, the data access requests correspond to different blockchain access interfaces, respectively.

In S 140, the interface module calls the blockchain access interface for the data storage space of the blockchain to access the target access data and feeds back an access result to the virtual machine instance.

The target access data exists in the data storage space of the blockchain. Optionally, different data structures may be supported in the data storage space, and the data structures are determined by settings of the blockchain system itself. For example, in the blockchain system, accounts, logs or transaction data records, smart contracts and the like generally need to be set, and rights data and the like may also be set. The target access data may have any data structure for accessing.

Optionally, the data storage space of the blockchain includes an account space and a contract space, the account space is used for storing account data in an external account and account data in a contract account, and the contract space is used for storing contract data in the contract account.

Optionally, the target access data includes account data and/or contract data. The account data and the contract data may be preferably stored in the account space and the contract space, respectively, so as to isolate different data structures from each other. However, with reference to account structures in Ethereum, accounts with different data structures may be set in the data storage space of the blockchain so that account settings in different systems are supported and data storage for accounts of Ethereum and accounts of other blockchain systems can be supported.

The external account and the contract account are typically set in Ethereum. The external account is an account controlled by a key. The contract account is an account controlled by a contract code. The external account and the contract account each include basic on-chain data of the account. The contract data in the contract account refers to data related to a smart contract. No contract data exists in the external account. Both the external account and the contract account are stored through a data structure of an account type in Ethereum. If the target blockchain system of migration does not support the contract account including smart contract codes, preferably, the account space and the contract space are separately provided to store two different types of data in isolation.

By calling the blockchain access interface, the interface module can implement an access operation on the target access data in the account space and the contract space of the blockchain, that is, implement a read operation and/or a write operation on the account data and the contract data and obtain the access result corresponding to the target access data. The interface module feeds back the access result to the virtual machine instance. The access result may be the specifically read data, or an access state of whether the access succeeds may be fed back.

According to the technical solution in the embodiment of the present application, when the Ethereum Virtual Machine is migrated to another blockchain system for transaction processing, the interface module is constructed to perform the instruction conversion on the data access request in the form of the Ethereum Virtual Machine instruction and determine the blockchain access interface corresponding to the function of the data access request so that a heterogeneous data storage space can be accessed. Therefore, the blockchain is open and componentized, thereby reducing the difficulty in migrating the Ethereum Virtual Machine to another blockchain system. Additionally, in the embodiment of the present application, the contract data and the account data are stored separately on the blockchain, which is compatible with data storage structures of different types and facilitates operations of another blockchain on different data. In the embodiment of the present application, the interface module is constructed and the contract data and the account data are stored separately on the blockchain so that the problem of the migration of the Ethereum Virtual Machine to another blockchain system is solved and the compatibility with Ethereum and other blockchain technologies is improved.

In the embodiment of the present application, after the virtual machine instance executes the to-be-processed transaction request, the blockchain access interface may be called and on-chain data of the blockchain may be updated according to intra-contract variables in the contract space. The intra-contract variables in the contract space are variables updated in a process of executing the smart contract and generally intermediate data and final data in a transaction processing process. The final data may be stored on the chain through the blockchain access interface.

This embodiment is an optional solution provided based on the preceding embodiment. Specifically, this embodiment is a refinement of a method for storing account data and contract data in the data storage space of the blockchain.

It is appreciated that the external account and the contract account are typically set in Ethereum. The external account is an account controlled by a key. The contract account is an account controlled by a contract code. The external account and the contract account each include basic on-chain data of the account. Contract data in the contract account refers to data related to a smart contract. No contract data exists in the external account. Both the contract account and the external account are stored in the data storage space of the blockchain.

The data storage space of the blockchain is used for supporting operations on data in at least two types of accounts, and account data in each of the accounts uses the same data structure.

The virtual machine instance generates a data read request and/or a data write request for data in the data storage space of the blockchain in the process of executing the to-be-processed transaction request for transaction data. Specifically, a data access operation is performed on data in the external account and the contract account in the data storage space of the blockchain. The external account uses the same data structure as the contract account in the data storage space. Optionally, both the external account and the contract account are stored through a data structure of an account type.

The data storage space of the blockchain includes an account space and a contract space. The account space is used for storing account data in the external account and account data in the contract account. The contract space is used for storing the contract data in the contract account. The target access data includes account data and/or contract data.

In the case where an Ethereum Virtual Machine is migrated to another blockchain system, if the target blockchain system of migration does not support the contract account including smart contract codes, preferably, the account space and the contract space are separately provided in the data storage space to store two different types of data in isolation.

Since the account data exists in both the external account and the contract account in Ethereum, and the external account differs from the contract account in that the contract account includes the contract data in addition to the account data, in order to store the account data and the contract data in isolation, the account data in the external account and the account data in the contract account are stored in the account space, and the contract data in the contract account is stored alone in the contract space.

The virtual machine instance generates the data access request for the target access data in the process of executing the to-be-processed transaction request, that is, the data access request for the account data in the account space and/or the contract data in the contract space.

In an optional embodiment, the account data includes an account identifier, a deal sequence number, an account public key and a token.

Exemplarily, in the data storage space of the blockchain, the account data in the contract account and the external account may be stored using the following data structure:
type AccountData struct {
Address string
Sequence uint
Pubkey string
Balance uint }
where Address denotes the account identifier, Sequence denotes the deal sequence number, Pubkey denotes the account public key, and Balance denotes the token. The account identifier is a data call identifier of account data and may be an account address or an account name, and different account data has different account identifiers. The deal sequence number refers to data for recording the number of times deals have been made. The account public key refers to a public key for encrypting an account. The token refers to a certificate of rights and interests in a digital form and represents an inherent and intrinsic value. The token is capable of representing all certificates of rights and interests that can be digitalized. Exemplarily, the token may be a certificate of rights and interests such as currents, bonds, account items, ownership, or qualifications.

To improve the management efficiency of the account data and the convenience to operate the account data, in an optional embodiment, the account data is stored in the form of a key-value pair. The account identifier is stored as a key value in a key field, and the deal sequence number, the account public key and the token are stored in a value field.

The account identifier as key information corresponds to three types of value information of the deal sequence number, the account public key and the token. In the case where the account data is operated by using the account identifier as the key value, the account identifier is used for indexing the account data. An account identifier of target account data is added to a data access instruction and a deal sequence number, an account public key and a token of the target account data may be acquired according to the account identifier.

In an optional embodiment, the contract data includes the account identifier, a contract bytecode and an intra-contract variable. The contract bytecode refers to a binary file that is obtained after the smart contract is compiled and is composed of a sequence of op codes/data pairs, and the contract bytecode includes an execution program and is an intermediate code. The intra-contract variable refers to variables included in the smart contract and data inputted into the variables during execution of the smart contract as well as intermediate variables generated during the execution of the smart contract.

An account identifier of the contract account is a contract call identifier of the smart contract. Different smart contracts have different account identifiers. When the smart contract is called, a contract call identifier is added to the data access request and the smart contract to be called may be determined according to the contract call identifier.

In the scenario where the contract data is operated, to improve the speed and accuracy of positioning the contract data, in an optional embodiment, the contract data is stored in the form of the key-value pair, where the account identifier is combined, as a prefix in a key value, with respective identifiers of the contract bytecode and the intra-contract variable to be stored in a key field, and the contract bytecode and the intra-contract variables are stored in a value field.

The key value includes the account identifier and the respective identifiers of the contract bytecode and the intra-contract variable. The account identifier as the prefix in the key value is capable of distinguishing different contract data. After the specific contract data is positioned, the contract data to be operated is further determined accurately according to the identifiers of the contract bytecode and the intra-contract variable in the key value.

The account identifier as the key information corresponds to two types of value information of the contract bytecode and the intra-contract variable. In the case where the contract data is operated by using the account identifier as the key value, the account identifier is used for indexing the contract data. An account identifier of target contract data is added to the data access instruction, and a contract bytecode and an intra-contract variable of the target contract data may be acquired according to the account identifier.

The account data and the contract data belonging to the same contract account have the same account identifier, and the account data is in one-to-one correspondence to the contract data. When the account data and contract data in the contract account are operated, both the account data and contract data are indexed through the key value. The key value for the account data includes only the account identifier, and the key value for the contract data is composed of both the account identifier as the prefix and the respective identifiers of the contract bytecode and the intra-contract variable. Therefore, the key value for the account data may be distinguished from the identifiers for the contract data.

In the embodiment of the present application, the data storage space is divided into the account space and the contract space, the account data in the external account and the account data in the contract account are stored in the account space, and the contract data in the contract account is stored in the contract space so that the account data and the contract data are stored in isolation, improving the compatibility of data structures stored in different blockchain systems. The account data in the contract account and the account data in the external account have the same data structure, which reduces the difficulty in performing data operations between blockchains and reduces the difficulty of migration between blockchains.

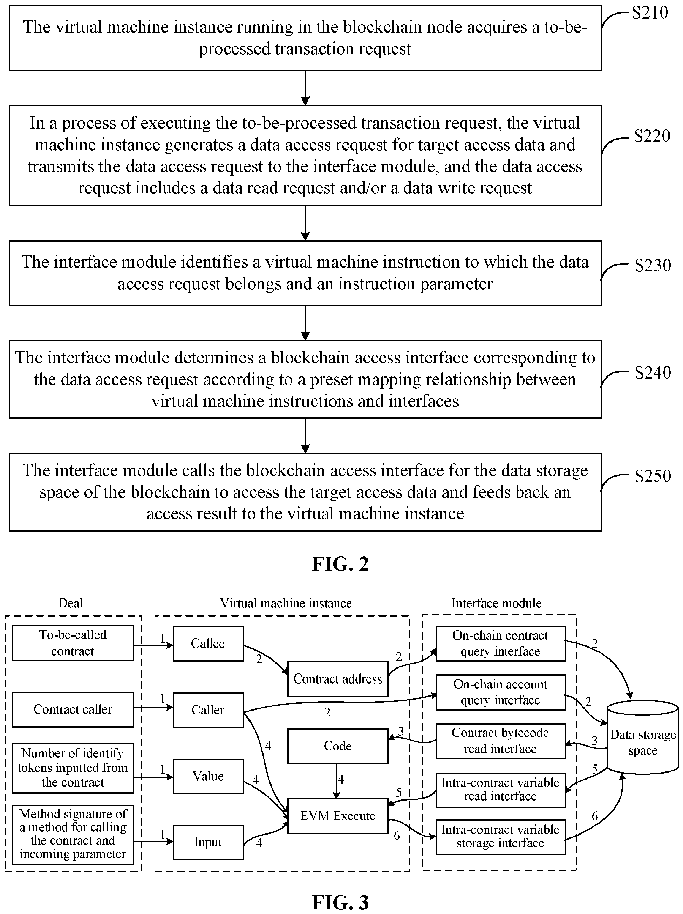

FIG. 2 is a schematic diagram of another Ethereum Virtual Machine-based transaction processing method according to an embodiment of the present application. This embodiment is an optional embodiment provided based on the preceding embodiment. Specifically, this embodiment is a refinement of the step in which the interface module performs the instruction conversion according to the data access request to determine the blockchain access interface corresponding to the function of the data access request.

Referring to FIG. 2, the Ethereum Virtual Machine-based transaction processing method provided in this embodiment includes steps described below.

In S210, the virtual machine instance running in the blockchain node acquires a to-be-processed transaction request.

In S220, in a process of executing the to-be-processed transaction request, the virtual machine instance generates the data access request for target access data and transmits the data access request to the interface module, and the data access request includes a data read request and/or a data write request.

In S230, the interface module identifies a virtual machine instruction to which the data access request belongs and an instruction parameter.

The virtual machine instruction and the instruction parameter are generated when the virtual machine instance executes the to-be-processed transaction request. The instruction parameter is a parameter variable included in the virtual machine instruction. The execution of the virtual machine instruction is capable of implementing access to the target access data. The target access data includes account data and contract data. Thus, the data access request is a read request and/or a write request for the account data and the contract data.

Since the smart contracts of Ethereum are developed through Geth which is a client of Ethereum in Go language and a necessary tool for the development of the smart contracts of Ethereum, instruction account operation instructions provided by Geth are generally used to manage accounts in Ethereum. Exemplarily, the virtual machine instruction and the instruction parameter corresponding to the data access request may be an account list instruction (geth account list), an account update instruction (geth account update) or an account creation instruction (personal.newAccount ('Your Password')). The contents in both the virtual machine instruction to which the data access request belongs and the instruction parameter are not limited herein and are determined according to actual cases.

In S240, the interface module determines the blockchain access interface corresponding to the data access request according to a preset mapping relationship between virtual machine instructions and interfaces.

An interface mapping relationship refers to a correspondence between virtual machine instructions and blockchain access interfaces. The interface mapping relationship is preconfigured in the interface module by a user according to the actual cases.

Since the data access request is directly related to the virtual machine instruction, the blockchain access interface corresponding to the data access request may be determined according to the virtual machine instruction and the interface mapping relationship on the premise that the interface mapping relationship is known.

To avoid a redundant mapping relationship, in an optional embodiment, one or more virtual machine instructions have an interface mapping relationship with one blockchain access interface.

That is to say, one blockchain access interface corresponds to at least one virtual machine instruction. Different virtual machine instructions may correspond to the same blockchain access interface. An interface mapping relationship between at least one virtual machine instruction and one blockchain access interface is essentially a correspondence between the target access data corresponding to the virtual machine instruction and data corresponding to the blockchain access interface in the data storage space.

In S250, the interface module calls the blockchain access interface for the data storage space of the blockchain to access the target access data and feeds back an access result to the virtual machine instance.

An operation performed on an account generally needs to include multiple steps. In an optional embodiment, the blockchain access interface has the function of calling another blockchain access interface. Exemplarily, the operation performed on the account is to create a contract account. Since a newly-created contract account is to be used, the newly-created contract account generally needs to be initialized. Therefore, after the interface module calls a contract account creation interface to create the contract account, the contract account creation interface calls a contract bytecode initialization interface to initialize the bytecode in the contract space.

In the embodiment of the present application, the instruction conversion is performed on the data access request by the interface module based on the mapping relationship and the blockchain access interface corresponding to a function of the data access request is determined so that the blockchain is open and componentized, thereby reducing the difficulty of data operations between different blockchains.

This embodiment is an optional solution provided based on the preceding embodiment. A category and a function of the blockchain access interface involved in the preceding embodiments are described in detail.

The category of the blockchain access interface includes an account access interface, a storage access interface and a contract operation interface; the account access interface is used for accessing the account data, the contract operation interface is used for operating a contract account, and the storage access interface is used for updating the contract data.

A blockchain read interface in the blockchain access interface includes at least one of an intra-contract variable read interface, an account token balance read interface, a contract bytecode read interface, an interface for reading a deal sequence number of an account, an on-chain contract query interface, an on-chain account query interface or a read interface for reading a hash of a block according to a height of the block.

The intra-contract variable read interface is used for reading an intra-contract variable in the contract data. The account token balance read interface is used for reading an account token balance in the account data. The contract bytecode read interface is used for reading a contract bytecode in the contract account. The interface for reading the deal sequence number of the account is used for reading the deal sequence number in the account data. The on-chain contract query interface is used for querying a smart contract stored on a chain. The on-chain account query interface is used for querying account information stored on the chain. The read interface for reading the hash of the block according to the height of the block is used for reading the hash of the block according to the height of the block.

A blockchain is generally regarded as a vertical stack, the first block serves as a primary block at the bottom of the stack and then each block is placed over a previous block. The height of a block represents a distance between this block and the primary block. The height of the block may be used as a block identifier for determining a particular block. The hash of the block is a main identifier of the block. A 32-byte hash value obtained through a secondary hash computation on a block header by the secure hash algorithm 256 (SHA256) is referred to as a hash value of the block, which is a digital fingerprint of the block.

In an optional embodiment, a blockchain write interface in the blockchain access interface includes at least one of a contract account creation interface, a contract bytecode initialization interface, a contract account deletion interface, an intra-contract variable storage interface, an account balance increase interface or an account balance decrease interface.

The contract account creation interface is used for creating a contract account in the contract space. The contract bytecode initialization interface is used for initializing a bytecode in the contract space. The contract account deletion interface is used for deleting a contract account in the contract space. The intra-contract variable storage interface is used for storing an intra-contract variable. The account balance increase interface is used for increasing an account balance. The account balance decrease interface is used for decreasing an account balance.

Among the preceding interfaces, the account access interface includes a read interface (that is, the account token balance read interface, the interface for reading the deal sequence number of the account and the on-chain account query interface) and a write interface (that is, the account balance increase interface and the account balance decrease interface). The contract operation interface includes a read interface (that is, the contract bytecode read interface, the on-chain contract query interface and the read interface for reading the hash of the block according to the height of the block) and a write interface (that is, the contract account creation interface, the contract bytecode initialization interface and the contract account deletion interface). The storage access interface includes a read interface (that is, the intra-contract variable read interface) and a write interface (that is, the intra-contract variable storage interface).

In the embodiment of the present application, multiple blockchain access interfaces of multiple types are provided in the blockchain where the target access data is stored, which provides convenience for a blockchain node where a virtual machine instance runs to process a transaction request and improves the coverage of transaction requests processable by the blockchain node of the virtual machine instance.

In the process of processing the to-be-processed transaction request, multiple data access requests may be generated at each link.

For example, the data access request that may be generated through the processing of the to-be-processed transaction request includes at least one of a contract account creation request, a contract bytecode initialization request, a contract account deletion request, an intra-contract variable storage request, an account balance increase request, an account balance decrease request, an intra-contract variable read request, an account token balance read request, a contract bytecode read request, a request for reading a deal sequence number of an account, an on-chain contract query request, an on-chain account query request, a read request for reading a hash of a block according to a height of the block or the like.

Data access requests generated in an ordinary process of processing a business transaction request are described below by way of example.
1. In the case where the data access request includes the on-chain contract query request and the on-chain account query request, when acquiring the to-be-processed transaction request, the virtual machine instance acquires a contract caller identifier and a to-be-called contract identifier in the to-be-processed transaction request.

The contract caller identifier is information for identifying an identity of a party that calls a smart contract and may be an account identifier. The to-be-called contract identifier is information for identifying the called smart contract. Optionally, the to-be-called contract identifier is a contract address or the account identifier.

The virtual machine instance generates the on-chain account query request and the on-chain contract query request of a caller according to the contract caller identifier and the to-be-called contract identifier, respectively, and transmits the on-chain account query request and the on-chain contract query request to the interface module.

To determine the validity of the to-be-processed transaction request, the virtual machine instance needs to determine whether an account and a contract identified by the contract caller identifier and the to-be-called contract identifier exist. The virtual machine instance generates the on-chain account query request and the on-chain contract query request of the caller according to the contract caller identifier and the to-be-called contract identifier, respectively, and the virtual machine instance transmits the on-chain account query request and the on-chain contract query request to the interface module. The on-chain account query request is used for querying whether the account identified by the contract caller identifier exists, and correspondingly, the on-chain contract query request is used for querying whether the contract identified by the to-be-called contract identifier exists.

The interface module performs the instruction conversion according to the data access request to determine the on-chain account query interface corresponding to the on-chain account query request and the on-chain contract query interface corresponding to the on-chain contract query request.

The interface module calls the on-chain account query interface for the account space of the blockchain to query whether a contract caller account exists on the chain.

After receiving the on-chain account query request, the interface module determines the account space corresponding to the contract caller identifier according to the contract caller identifier in the on-chain account query request and calls the on-chain account query interface for the account space of the blockchain to query whether the contract caller account exists on the chain.

The interface module calls the on-chain contract query interface for the contract space of the blockchain to query whether a to-be-called contract exists on the chain.

After receiving the on-chain contract query request, the interface module determines the contract space corresponding to the to-be-called contract identifier according to the to-be-called contract identifier in the on-chain contract query request and calls the on-chain contract query interface for the contract space of the blockchain to query whether the to-be-called contract exists on the chain.

The interface module feeds back a query result of the contract caller account and the to-be-called contract to the virtual machine instance.

The query result includes the case where the contract caller account exists or does not exist, the case where the to-be-called contract exists or does not exist and a combination thereof. The interface module feeds back the query result to the virtual machine instance. If the query result is that one or both of the contract caller account and the to-be-called contract do not exist, the virtual machine instance feeds back error information for the to-be-processed transaction request.

2. In the case where the data access request is the contract bytecode read request, when the acquired query result fed back by the interface module represents that an on-chain account and an on-chain contract exist, the virtual machine instance generates the contract bytecode read request according to the to-be-called contract identifier and transmits the contract bytecode read request to the interface module.

The contract bytecode read request refers to a request for reading a contract bytecode stored in the contract space. If the query result fed back by the interface module to the virtual machine instance represents that the on-chain account and the on-chain contract exist, it indicates that the to-be-processed transaction request is valid, and the virtual machine instance generates the contract bytecode read request according to the to-be-called contract identifier and transmits the contract bytecode read request to the interface module.

The interface module performs the instruction conversion according to the data access request to determine the contract bytecode read interface corresponding to the contract bytecode read request.

The interface module calls the contract bytecode read interface for the contract space of the blockchain to read a contract bytecode of the to-be-called contract and feeds back the read contract bytecode to the virtual machine instance.

After receiving the contract bytecode read request, the interface module determines the contract space where the contract bytecode is stored according to the contract bytecode read request and calls the contract bytecode read interface for the contract space of the blockchain to read the contract bytecode of the to-be-called contract.

3. In the case where the data access request is the intra-contract variable read request, the virtual machine instance executes the to-be-processed transaction request according to the contract bytecode fed back by the interface module and a contract parameter and a token in the to-be-processed transaction request, and in the process of executing the to-be-processed transaction request, the virtual machine instance generates the intra-contract variable read request and transmits the intra-contract variable read request to the interface module. The intra-contract variable includes a variable and a variable value in a running process of a smart contract.

The contract parameter and the token are variables to be inputted to the virtual machine instance when the virtual machine instance executes the contract bytecode. The process of the virtual machine instance executing the to-be-processed transaction request is a process of executing the contract bytecode fed back by the interface module. In the process of executing the contract bytecode, the virtual machine instance generates the intra-contract variable read request and transmits the intra-contract variable read request to the interface module.

It is to be noted that not all intra-contract variables need to be stored on the chain. The intra-contract variables include intermediate values generated in the process of executing the contract, and these intermediate values may be covered by other values generated in the process of executing the contract. Exemplarily, a smart contract with a billing accumulation function includes variables A and B, where A is an existing amount and B is an amount accumulated this time. In different deals, A and B have different values. For example, a user initiates a deal in which B (2 dollar) is accumulated on the basis of A (10 dollar). Then, in the above example, A and B are variables, 10 and 2 are values of the variables, and A, B and the values 10 and 2 corresponding to A and B are all intra-contract variables and need to be recorded in the contract space. The variable values corresponding to the variables A and B may change in the process of executing the smart contract. Generally, the variable values in the process are not stored on the chain while the variables A and B and the final variable values corresponding to these two variables are stored on the chain.

The interface module performs the instruction conversion according to the data access request to determine the intra-contract variable read interface corresponding to the intra-contract variable read request.

The interface module calls the intra-contract variable read interface for the contract space of the blockchain to read a value of the intra-contract variable and feeds back the read value to the virtual machine instance.

After receiving the intra-contract variable read request, the interface module determines the contract space where the intra-contract variables are stored according to the intra-contract variable read request, calls the intra-contract variable read interface for the contract space of the blockchain to read intra-contract variables of the to-be-called contract, and feeds back the read intra-contract variable to the virtual machine instance.

4. In the case where the data access request is the intra-contract variable storage request, the virtual machine instance generates the intra-contract variable storage request and transmits the intra-contract variable storage request to the interface module in the process of executing the to-be-processed transaction request.

The intra-contract variable storage request is a request for storing an intra-contract variable in the contract space. The virtual machine instance generates a data processing result in the process of executing the to-be-processed transaction request. If the data processing result needs to be stored in the contract space, the virtual machine instance generates the intra-contract variable storage request and transmits the intra-contract variable storage request to the interface module.

The interface module performs the instruction conversion according to the data access request to determine the intra-contract variable storage interface corresponding to the intra-contract variable storage request.

The interface module calls the intra-contract variable storage interface for the contract space of the blockchain to write a value of the intra-contract variable.

After receiving the intra-contract variable storage request, the interface module determines a target contract space for the intra-contract variables according to the intra-contract variable storage request and calls the intra-contract variable storage interface for the contract space of the blockchain to write the value of the intra-contract variable into the contract space.

In the embodiment of the present application, the virtual machine instance and the interface module coordinate with each other to jointly complete the to-be-processed transaction request so that data access operations between different blockchains are achieved, the problem of migration of an Ethereum Virtual Machine to another blockchain system is solved, and the compatibility with Ethereum and other blockchain technologies is improved.

FIG. 3 is a schematic diagram of an Ethereum Virtual Machine-based transaction processing method according to an embodiment of the present application. This embodiment is an optimization of the preceding embodiments and is a preferably embodiment. Specifically, a complete process of executing a to-be-processed transaction request is described.

Referring to FIG. 3, the Ethereum Virtual Machine-based transaction processing method provided in this embodiment includes steps described below.

In step 1, the virtual machine instance running in the blockchain node acquires the to-be-processed transaction request.

Optionally, the to-be-processed transaction request is a deal transaction request. The deal transaction request includes four parameters: a contract caller (From), a called contract (To), an incoming token for calling the contract (Amout) and a method signature of a method for calling the contract and an incoming parameter (Data). The blockchain node inputs From, To, Amout and Data in the deal transaction request to the virtual machine instance, which exist as Caller, Callee, Value and Input in the virtual machine instance.

Specifically, the virtual machine instance running in the blockchain node acquires the to-be-processed transaction request initiated by the contract caller. The to-be-processed transaction request includes a contract caller identifier, a to-be-called contract identifier, a contract parameter and a token. In the case where the to-be-processed transaction request is the deal transaction request, Caller in the virtual machine instance is the contract caller identifier, Callee is the to-be-called contract identifier, Value is the token, and Input is the contract parameter.

In step 2, the virtual machine instance calls the on-chain account query interface (Acc Exists) and the on-chain contract query interface (Contract Exists) in the interface module according to Caller and Callee to query whether the to-be-called contract and the contract caller exist in the data storage space of the blockchain, respectively.

Specifically, after the virtual machine instance receives the deal transaction request, the virtual machine instance generates the on-chain account query request and the on-chain contract query request of the caller according to the contract caller identifier and the to-be-called contract identifier in the deal transaction request, respectively, and transmits the on-chain account query request and the on-chain contract query request to the interface module. Interfaces for the virtual machine instance are encapsulated in the interface module. The interface module calls the on-chain account query interface for the account space of the blockchain according to the on-chain account query request to query whether a contract caller account exists on the chain. The interface module calls the on-chain contract query interface for the contract space of the blockchain according to the on-chain contract query request to query whether the to-be-called contract exists on the chain. The interface module feeds back a query result of the contract caller account and the to-be-called contract to the virtual machine instance.

In step 3, if both the contract caller and the to-be-called contract exist in the data storage space of the blockchain, the virtual machine instance calls the contract bytecode read interface (Get Code) in the interface module to acquire a contract bytecode (Code) stored in the contract space (Contract Store).

Specifically, when the acquired query result fed back by the interface module represents that an on-chain account and an on-chain contract exist, the virtual machine instance generates the contract bytecode read request according to the to-be-called contract identifier and transmits the contract bytecode read request to the interface module. The interface module calls the contract bytecode read interface for the contract space of the blockchain, reads the contract bytecode of the to-be-called contract, and feeds back the read contract bytecode to the virtual machine instance.

In step 4, the virtual machine instance transmits Caller, Value, Input and Code to a virtual machine instance execution module (EVM Execute) for EVM Execute to execute the deal transaction request.

In steps 5 and 6, EVM Execute executes the deal transaction request according to Caller, Value, Input and Code, and in the process of executing the deal transaction request, the reading and storage of intra-contract variables are involved so that a contract state is changed.

Specifically, the virtual machine instance executes the to-be-processed transaction request according to the contract bytecode fed back by the interface module and the contract parameter and the token in the to-be-processed transaction request, and in the process of executing the to-be-processed transaction request, the virtual machine instance generates the intra-contract variable read request and transmits the intra-contract variable read request to the interface module. The intra-contract variables include variables and variable values in a running process of a smart contract. The interface module calls the intra-contract variable read interface for the contract space of the blockchain, reads a value of an intra-contract variable, and feeds back the read value to the virtual machine instance.

In the process of executing the to-be-processed transaction request, the virtual machine instance generates the intra-contract variable storage request and transmits the intra-contract variable storage request to the interface module. The interface module calls the intra-contract variable storage interface for the contract space of the blockchain to write the value of an intra-contract variable. It is to be noted that connection lines and reference numerals in FIG. 3 indicate data flows in steps identified by the reference numerals.

In the embodiment of the present application, the virtual machine instance generates a data access request for target access data and transmits the data access request to the interface module in the process of executing the to-be-processed transaction request, and the interface module calls the blockchain access interface for the data storage space of the blockchain to access the target access data and feeds back an access result to the virtual machine instance. In the present application, the virtual machine instance and the interface module coordinate with each other to jointly complete the to-be-processed transaction request so that data access operations between different blockchains are achieved, the problem of migration of an Ethereum Virtual Machine to another blockchain system is solved, and the compatibility with Ethereum and other blockchain technologies is improved.

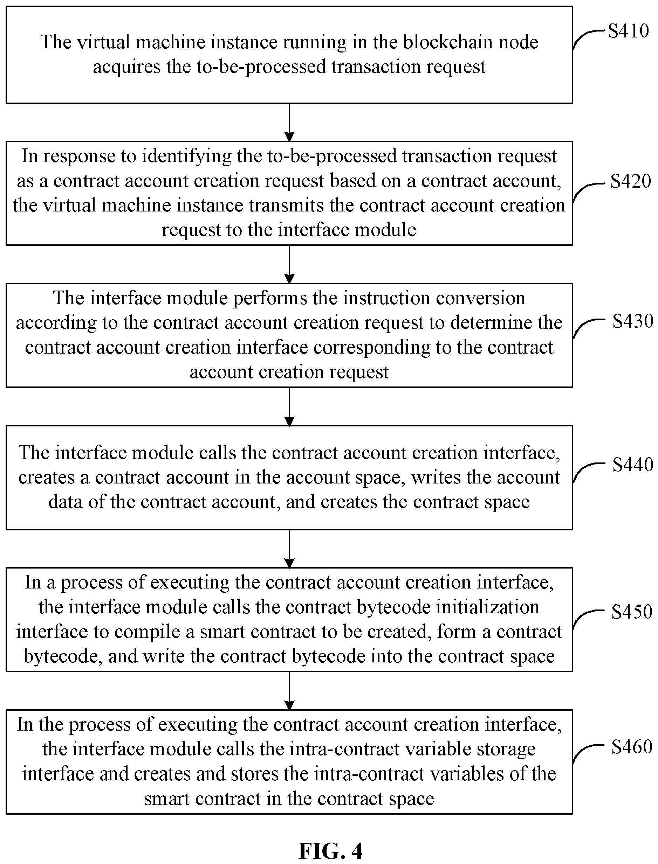

FIG. 4 is a schematic diagram of another Ethereum Virtual Machine-based transaction processing method according to an embodiment of the present application. This embodiment is an optional solution provided based on the preceding embodiment. Specifically, this embodiment is a refinement of the process of executing the to-be-processed transaction request in the case where the to-be-processed transaction request is a contract account creation request based on a contract account.

Referring to FIG. 4, the Ethereum Virtual Machine-based transaction processing method provided in this embodiment includes steps described below.

In S410, the virtual machine instance running in the blockchain node acquires the to-be-processed transaction request.

In S420, in response to identifying the to-be-processed transaction request as the contract account creation request based on the contract account, the virtual machine instance transmits the contract account creation request to the interface module.

The contract account creation request based on the contract account refers to a request for creating a new contract account. The contract account creation request includes writing both account data and contract data of the newly-created contract account. The contract account creation request based on the contract account includes writing the account data of the newly-created contract account and a smart contract.

The virtual machine instance executes the contract account creation request based on the contract account to generate a data access request for a target contract account. Since the contract account includes the contract data and the account data, specifically, an account data write request and a contract data write request are generated for the contract account. The account data write request is to write the account data of the contract account into the account space. The contract data write request is to write the contract data of the contract account into the contract space. The contract space and the account space are isolated in space.

In S430, the interface module performs the instruction conversion according to the data access request to determine the contract account creation interface corresponding to the contract account creation request.

The interface module identifies a virtual machine instruction to which the data access request belongs and an instruction parameter and determines the blockchain access interface corresponding to the data access request according to a preset mapping relationship between virtual machine instructions and interfaces.

In S440, the interface module calls the contract account creation interface according to the contract account creation request, creates a contract account in the account space, writes account data of the contract account, and creates the contract space.

Generally, the account space exists on the blockchain. Therefore, after receiving the contract account creation request, the interface module may determine a target account space according to the contract account creation request and call the contract account creation interface for the account space of the blockchain to create the contract account and write the account data into the account space. However, the contract space is a space for storing the contract data and needs to be created when the contract account is created.

In S450, in a process of executing the contract account creation interface, the interface module calls the contract bytecode initialization interface to compile a smart contract to be created, form a contract bytecode, and write the contract bytecode into the contract space.

The contract bytecode initialization interface is an interface for compiling the smart contract to be created to obtain the contract bytecode and writing the bytecode into the contract space.

After the contract space is created, the contract data in the contract space needs to be initialized. In the process of executing the contract account creation interface, the interface module calls the contract bytecode initialization interface, compiles the smart contract to form the contract bytecode, and writes the contract bytecode into the contract space.

In S460, in the process of executing the contract account creation interface, the interface module calls the intra-contract variable storage interface and creates and stores an intra-contract variable of the smart contract in the contract space.

Since there are variables in the smart contract and these variables are to be operated in a process of executing the smart contract, the variables and variable values involved in the smart contract also need to be stored in the contract space. In the process of executing the contract account creation interface, the interface module calls the intra-contract variable storage interface and creates and stores the intra-contract variable of the smart contract in the contract space.

According to the technical solution in the embodiment of the present application, a contract-account creation solution based on the contract account is provided through coordination of the virtual machine instance and the interface module, which can isolate the account space and the contract space and be used for a user to create a contract account according to a requirement of the user, thereby improving business expansibility of the blockchain.

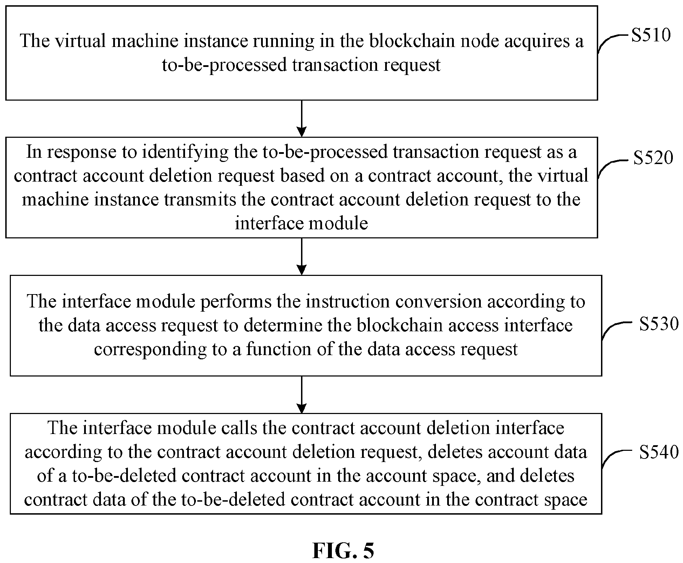

FIG. 5 is a schematic diagram of another Ethereum Virtual Machine-based transaction processing method according to an embodiment of the present application. This embodiment is an optional solution provided based on the preceding embodiment. Specifically, this embodiment is a refinement of the process of executing the to-be-processed transaction request in the case where the to-be-processed transaction request is a contract account deletion request based on a contract account.

Referring to FIG. 5, the Ethereum Virtual Machine-based transaction processing method provided in this embodiment includes steps described below.

In S510, the virtual machine instance running in the blockchain node acquires the to-be-processed transaction request.

In S520, in response to identifying the to-be-processed transaction request as the contract account deletion request based on the contract account, the virtual machine instance transmits the contract account deletion request to the interface module.

The contract account deletion request based on the contract account refers to a request for deleting an existing contract account from contract accounts. The contract account deletion request based on the contract account includes deleting account data and contract data of a target contract account. The contract account deletion request based on the contract account includes an account identifier of a to-be-deleted contract account.

The virtual machine instance executes the contract account deletion request based on the contract account to generate the data access request for the target contract account. Since the contract account includes the contract data and the account data, specifically, the account data write request and the contract data write request are generated for the contract account. The account data write request is to write the account data of the contract account into the account space. The contract data write request is to write the contract data of the contract account into the contract space. The contract space and the account space are isolated in space. Deleting the contract account may be emptying both the contract data and the account data in the contract account or may be emptying only the account identifier fields of both the contract data and the account data so that the contract account cannot be indexed by other users, thereby achieving the purpose of deleting the contract account.

In S530, the interface module performs the instruction conversion according to the data access request to determine the contract account deletion interface corresponding to the contract account deletion request.

The interface module identifies a virtual machine instruction to which the data access request belongs and an instruction parameter and determines the blockchain access interface corresponding to the data access request according to a preset mapping relationship between virtual machine instructions and interfaces.

In S540, the interface module calls the contract account deletion interface according to the contract account deletion request, deletes the account data of the to-be-deleted contract account in the account space, and deletes the contract data in the contract space of the to-be-deleted contract account.

Since the contract account includes the contract data and the account data and the contract data and the account data are respectively stored in the contract space and the account space, when deleting the contract account, the interface module calls the contract account deletion interface according to the contract account deletion request, deletes the account data of the to-be-deleted contract account in the account space, and deletes the contract data of the to-be-deleted contract account in the contract space.

In the embodiment of the present application, a contract-account deletion solution based on the contract account is provided through the coordination of the virtual machine instance and the interface module so that the user can delete the contract account when the user does not expect the contract account to be used by another user or when the contract account is discarded, thereby avoiding the waste of block storage resources and improving the privacy of the contract account at the same time.

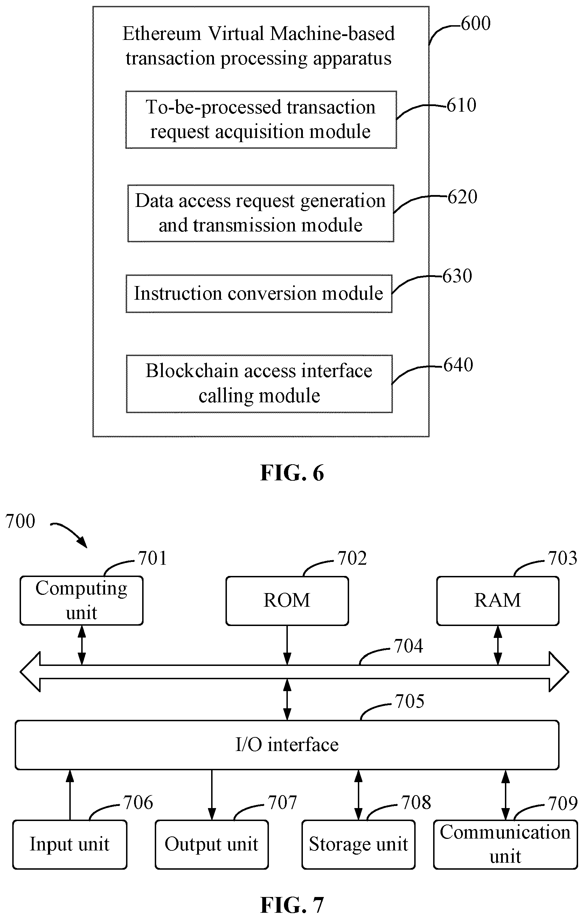

FIG. 6 is a schematic diagram of an Ethereum Virtual Machine-based transaction processing apparatus according to an embodiment of the present application. Referring to FIG. 6, the embodiment of the present application discloses the Ethereum Virtual Machine-based transaction processing apparatus 600. The apparatus 600 may include a to-be-processed transaction request acquisition module 610, a data access request generation and transmission module 620, an instruction conversion module 630 and a blockchain access interface calling module 640.

The to-be-processed transaction request acquisition module 610 is configured to cause a virtual machine instance running in a blockchain node to acquire a to-be-processed transaction request.

The data access request generation and transmission module 620 is configured to cause the virtual machine instance to: in a process of executing the to-be-processed transaction request, generate a data access request for target access data and transmit the data access request to an interface module, and the data access request includes a data read request and/or a data write request.

The instruction conversion module 630 is configured to cause the interface module to perform instruction conversion according to the data access request to determine a blockchain access interface corresponding to a function of the data access request.

The blockchain access interface calling module 640 is configured to cause the interface module to call the blockchain access interface for a data storage space of a blockchain to access the target access data and feed back an access result to the virtual machine instance.

The target access data includes account data and/or contract data.

The account data and the contract data may be stored using the data structure of the contract account just like an Ethereum account. However, to be compatible with a data structure of an account in another blockchain system, preferably, the data storage space of the blockchain includes an account space and a contract space, the account space is used for storing account data in an external account and account data in a contract account, and the contract space is used for storing contract data in the contract account.

According to the technical solution in the embodiment of the present application, when an Ethereum Virtual Machine is migrated to another blockchain system for transaction processing, the interface module is constructed to perform the instruction conversion on the data access request in the form of an Ethereum Virtual Machine instruction and determine the blockchain access interface corresponding to the function of the data access request so that a heterogeneous data storage space can be accessed. Therefore, the blockchain is open and componentized, thereby reducing the difficulty in migrating the Ethereum Virtual Machine to another blockchain system. Additionally, in the embodiment of the present application, the contract data and the account data are stored separately on the blockchain, which is compatible with data storage structures of different types and facilitates operations of another blockchain on different data. In the embodiment of the present application, the interface module is constructed and the contract data and the account data are stored separately on the blockchain so that the problem of migration of the Ethereum Virtual Machine to another blockchain system is solved and the compatibility with Ethereum and other blockchain technologies is improved.

Optionally, the data storage space of the blockchain is used for supporting operations on data in at least two types of accounts, where account data in each of the accounts uses the same data structure.

Optionally, the account data includes an account identifier, a deal sequence number, an account public key and a token.

In an embodiment the account data is stored in the form of a key-value pair, the account identifier serves as a key value and is stored in a key field, and the deal sequence number, the account public key and the token are stored in a value field.

Optionally, the contract data includes the account identifier, a contract bytecode and an intra-contract variable, where the account identifier is a contract call identifier of a smart contract.

Optionally, the contract data is stored in the form of the key-value pair, the account identifier is combined, as a prefix in a key value, with respective identifiers of the contract bytecode and the intra-contract variable to be stored in a key field, and the contract bytecode and the intra-contract variable are stored in a value field.

Optionally, the instruction conversion module includes an instruction information identification submodule and a blockchain access interface determination submodule. The instruction information identification submodule is configured to cause the interface module to identify a virtual machine instruction to which the data access request belongs and an instruction parameter. The blockchain access interface determination submodule is configured to cause the interface module to determine the blockchain access interface corresponding to the data access request according to a preset mapping relationship between virtual machine instructions and interfaces.

Optionally, one or more virtual machine instructions have an interface mapping relationship with one blockchain access interface.

Optionally, the blockchain access interface has a function of calling another blockchain access interface.

Optionally, a category of the blockchain access interface includes an account access interface, a storage access interface and a contract operation interface; where the account access interface is used for accessing the account data, the contract operation interface is used for operating the contract account, and the storage access interface is used for updating the contract data.

Optionally, a blockchain read interface in the blockchain access interface includes at least one of: an intra-contract variable read interface, an account token balance read interface, a contract bytecode read interface, an interface for reading a deal sequence number of an account, an on-chain contract query interface, an on-chain account query interface or a read interface for reading a hash of a block according to a height of the block.

Optionally, the data access request generation and transmission module includes an identifier information acquisition submodule and a query request generation submodule. The identifier information acquisition submodule is configured to cause the virtual machine instance to acquire a contract caller identifier and a to-be-called contract identifier in the to-be-processed transaction request in response to acquiring the to-be-processed transaction request. The query request generation submodule is configured to cause the virtual machine instance to generate an on-chain account query request and an on-chain contract query request of a caller according to the contract caller identifier and the to-be-called contract identifier, respectively, and transmit the on-chain account query request and the on-chain contract query request to the interface module.

Correspondingly, the blockchain access interface calling module includes an on-chain account query interface calling submodule, an on-chain contract query interface calling submodule and a query result feedback submodule. The on-chain account query interface calling submodule is configured to cause the interface module to call the on-chain account query interface for the account space of the blockchain to query whether a contract caller account exists on a chain. The on-chain contract query interface calling submodule is configured to cause the interface module to call the on-chain contract query interface for the contract space of the blockchain to query whether a to-be-called contract exists on the chain. The query result feedback submodule is configured to cause the interface module to feed back a query result of the contract caller account and the to-be-called contract to the virtual machine instance.

Optionally, the data access request generation and transmission module is configured to cause the virtual machine instance to generate a contract bytecode read request according to the to-be-called contract identifier and transmit the contract bytecode read request to the interface module in response to acquiring the query result fed back by the interface module that an on-chain account and an on-chain contract exist.

Correspondingly, the blockchain access interface calling module is configured to cause the interface module to call the contract bytecode read interface for the contract space of the blockchain to read a contract bytecode of the to-be-called contract and feed back the read contract bytecode to the virtual machine instance.

Optionally, the data access request generation and transmission module is configured to cause the virtual machine instance to: execute the to-be-processed transaction request according to the contract bytecode fed back by the interface module and a contract parameter and a token in the to-be-processed transaction request, and in the process of executing the to-be-processed transaction request, generate an intra-contract variable read request and transmit the intra-contract variable read request to the interface module.

Correspondingly, the blockchain access interface calling module is configured to cause the interface module to call the intra-contract variable read interface for the contract space of the blockchain to read a value an of intra-contract variable and feed back the read value to the virtual machine instance.

Optionally, a blockchain write interface in the blockchain access interface includes at least one of: a contract account creation interface, a contract bytecode initialization interface, a contract account deletion interface, an intra-contract variable storage interface, an account balance increase interface or an account balance decrease interface.

Optionally, the data access request generation and transmission module is configured to cause the virtual machine instance to: in the process of executing the to-be-processed transaction request, generate an intra-contract variable storage request and transmit the intra-contract variable storage request to the interface module.

Correspondingly, the blockchain access interface calling module is configured to cause the interface module to call the intra-contract variable storage interface for a contract space of the blockchain to write a value of an intra-contract variable.

Optionally, the data access request generation and transmission module is configured to cause the virtual machine instance to transmit a contract account creation request to the interface module in response to identifying the to-be-processed transaction request as the contract account creation request based on a contract account.

Correspondingly, the blockchain access interface calling module includes a contract account creation submodule, a contract bytecode write submodule and an intra-contract variable storage submodule. The contract account creation submodule is configured to cause the interface module to call the contract account creation interface according to the contract account creation request, create a contract account in the account space, write account data of the contract account, and create a contract space. The contract bytecode write submodule is configured to cause the interface module to: in a process of executing the contract account creation interface, call the contract bytecode initialization interface to compile a smart contract to be created, form a contract bytecode, and write the contract bytecode into the contract space. The intra-contract variable storage submodule is configured to cause the interface module to: in the process of executing the contract account creation interface, call the intra-contract variable storage interface and create and store intra-contract variables of the smart contract in the contract space.

Optionally, the data access request generation and transmission module is configured to cause the virtual machine instance to transmit a contract account deletion request to the interface module in response to identifying the to-be-processed transaction request as the contract account deletion request based on the contract account.

Correspondingly, the blockchain access interface calling module is configured to cause the interface module to call the contract account deletion interface according to the contract account deletion request, delete account data of a to-be-deleted contract account in the account space, and delete contract data in a contract space of the to-be-deleted contract account.

Optionally, the apparatus further includes an on-chain data update module. The on-chain data update module is configured to call the blockchain access interface and update on-chain data of the blockchain according to an intra-contract variable in the contract space after the virtual machine instance executes the to-be-processed transaction request.

The Ethereum Virtual Machine-based transaction processing apparatus provided in this embodiment of the present application can perform the Ethereum Virtual Machine-based transaction processing method provided in any one of embodiments of the present application and has function modules and beneficial effects corresponding to the performed Ethereum Virtual Machine-based transaction processing method.

According to embodiments of the present application, the present application further provides an electronic device, a readable storage medium and a computer program product.

FIG. 7 is a block diagram illustrative of an exemplary electronic device 700 that may be used for implementing embodiments of the present application. Electronic devices are intended to represent various forms of digital computers, for example, laptop computers, desktop computers, worktables, personal digital assistants, servers, blade servers, mainframe computers and other applicable computers. Electronic devices may further represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 7, the device 700 includes a computing unit 701. The computing unit 701 may perform various types of appropriate operations and processing based on a computer program stored in a read-only memory (ROM) 702 or a computer program loaded from a storage unit 708 to a random-access memory (RAM) 703. Various programs and data required for operations of the device 700 may also be stored in the RAM 703. The computing unit 701, the ROM 702 and the RAM 703 are connected to each other through a bus 704. An input/output (I/O) interface 705 is also connected to the bus 704.

Multiple components in the electronic device 700 are connected to the I/O interface 705. The multiple components include an input unit 706 such as a keyboard and a mouse, an output unit 707 such as various types of displays and speakers, the storage unit 708 such as a magnetic disk and an optical disk, and a communication unit 709 such as a network card, a modem and a wireless communication transceiver. The communication unit 709 allows the device 700 to exchange information/data with other devices over a computer network such as the Internet and/or various telecommunications networks.

The computing unit 701 may be various general-purpose and/or dedicated processing components having processing and computing capabilities. Some examples of the computing unit 701 include, but are not limited to, central processing units (CPUs), graphics processing units (GPUs), various dedicated artificial intelligence (AI) computing chips, various computing units running machine learning models and algorithms, digital signal processors (DSPs) and any suitable processors, controllers and microcontrollers. The computing unit 701 performs various methods and processing described above, such as the Ethereum Virtual Machine-based transaction processing method. For example, in some embodiments, the Ethereum Virtual Machine-based transaction processing method may be implemented as a computer software program tangibly contained in a machine-readable medium such as the storage unit 708. In some embodiments, part or all of a computer program may be loaded and/or installed on the device 700 via the ROM 702 and/or the communication unit 709. When the computer program is loaded onto the RAM 703 and executed by the computing unit 701, one or more steps of the preceding Ethereum Virtual Machine-based transaction processing method may be performed. Alternatively, in other embodiments, the computing unit 701 may be configured, in any other suitable manner (for example, by means of firmware), to perform the Ethereum Virtual Machine-based transaction processing method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting data and instructions to the memory system, the at least one input device and the at least one output device.

Program codes for implementing the methods of the present disclosure may be compiled in any combination of one or more programming languages. These program codes may be provided for a processor or controller of a general-purpose computer, a dedicated computer or another programmable data processing device such that the program codes, when executed by the processor or controller, cause functions/operations specified in the flowcharts and/or block diagrams to be implemented. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with a system, apparatus or device that executes instructions. The machine-readable medium may be a machine-readable signal medium or a machine-readable storage medium. Machine-readable media may include, but are not limited to, electronic, magnetic, optical, electromagnetic, infrared or semiconductor systems, apparatuses or devices or any suitable combinations thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host, which is a host product in a cloud computing service system, so as to solve the defects of difficult management and weak business scalability in traditional physical hosts and virtual private server (VPS) services.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors The invention is defined only be the scope of the appended claims.

## Claims

1. An Ethereum Virtual Machine-based transaction processing method, the method being applied to a non-Ethereum blockchain node of a non-Ethereum blockchain system comprising:
acquiring (S110), by an Ethereum virtual machine instance running in the non-Ethereum blockchain node, a to-be-processed transaction request;
in a process of executing the to-be-processed transaction request, generating (S120), by the Ethereum virtual machine instance, a data access request in a form of an Ethereum Virtual Machine instruction for target access data and transmitting the data access request to an interface module, wherein the data access request comprises a data read request and/or a data write request;
performing (S130), by the interface module, instruction conversion according to the data access request to determine a blockchain access interface corresponding to a function of the data access request; and
calling (S140), by the interface module, the blockchain access interface to access a data storage space of the non-Ethereum blockchain system where the target access data is located and feeding back an access result to the Ethereum virtual machine instance;
wherein the target access data comprises account data and/or contract data, the contract data comprises an account identifier, a contract bytecode and an intra-contract variable, and the account identifier is a contract call identifier of a smart contract.

2. The method of claim 1, wherein the data storage space of the non-Ethereum blockchain system comprises an account space and a contract space, the account space is used for storing account data in an external account and account data in a contract account, and the contract space is used for storing contract data in the contract account; and
wherein the data storage space of the non-Ethereum blockchain system is used for supporting operations on data in at least two types of accounts, and account data in each of the accounts uses a same data structure.

3. The method of claim 2, wherein a category of the blockchain access interface comprises an account access interface, a storage access interface and a contract operation interface; and
wherein the account access interface is used for accessing the account data, the contract operation interface is used for operating the contract account, and the storage access interface is used for updating the contract data.

4. The method of claim 1, wherein performing (S130), by the interface module, the instruction conversion according to the data access request to determine the blockchain access interface corresponding to the function of the data access request comprises:
identifying, by the interface module, a virtual machine instruction to which the data access request belongs and an instruction parameter; and
determining, by the interface module, the blockchain access interface corresponding to the data access request according to a preset mapping relationship between virtual machine instructions and interfaces.

5. The method of claim 3, wherein a blockchain read interface in the blockchain access interface comprises at least one of:
an intra-contract variable read interface;
an account token balance read interface;
a contract bytecode read interface;
an interface for reading a deal sequence number of an account;
an on-chain contract query interface;
an on-chain account query interface; or
a read interface for reading a hash of a block according to a height of the block.

6. The method of claim 5, wherein in the process of executing the to-be-processed transaction request, generating (S120), by the Ethereum virtual machine instance, the data access request in the form of the Ethereum Virtual Machine instruction for the target access data and transmitting the data access request to the interface module comprises:
in response to acquiring the to-be-processed transaction request, acquiring, by the Ethereum virtual machine instance, a contract caller identifier and a to-be-called contract identifier in the to-be-processed transaction request; and
generating, by the Ethereum virtual machine instance, an on-chain account query request and an on-chain contract query request of a caller according to the contract caller identifier and the to-be-called contract identifier, respectively, and transmitting the on-chain account query request and the on-chain contract query request to the interface module;
wherein calling (S140), by the interface module, the blockchain access interface to access a data storage space of the non-Ethereum blockchain system where the target access data is located and feeding back the access result to the virtual machine instance comprises:
calling, by the interface module, the on-chain account query interface for the account space to query whether a contract caller account exists on a chain;
calling, by the interface module, the on-chain contract query interface for the contract space to query whether a to-be-called contract exists on the chain; and
feeding back, by the interface module, a query result of both the contract caller account and the to-be-called contract to the Ethereum virtual machine instance.

7. The method of claim 6, wherein in the process of executing the to-be-processed transaction request, generating (S120), by the Ethereum virtual machine instance, the data access request in the form of the Ethereum Virtual Machine instruction for the target access data and transmitting the data access request to the interface module comprises:
in response to acquiring the query result fed back by the interface module that an on-chain account and an on-chain contract exist, generating, by the Ethereum virtual machine instance, a contract bytecode read request according to the to-be-called contract identifier and transmitting the contract bytecode read request to the interface module; and
wherein calling (S 140), by the interface module, the blockchain access interface to access the data storage space of the non-Ethereum blockchain system where the target access data is located and feeding back the access result to the Ethereum virtual machine instance comprises:
calling, by the interface module, the contract bytecode read interface for the contract space to read a contract bytecode of the to-be-called contract and feeding back the read contract bytecode to the Ethereum virtual machine instance.

8. The method of claim 7, wherein in the process of executing the to-be-processed transaction request, generating (S120), by the Ethereum virtual machine instance, the data access request in the form of the Ethereum Virtual Machine instruction for the target access data and transmitting the data access request to the interface module comprises:
executing, by the Ethereum virtual machine instance, the to-be-processed transaction request according to the contract bytecode fed back by the interface module and a contract parameter and a token in the to-be-processed transaction request, and in the process of executing the to-be-processed transaction request, generating an intra-contract variable read request and transmitting the intra-contract variable read request to the interface module;
wherein calling (S 140), by the interface module, the blockchain access interface to access the data storage space of the non-Ethereum blockchain system where the target access data is located and feeding back the access result to the virtual machine instance comprises:
calling, by the interface module, the intra-contract variable read interface for the contract space to read a value of an intra-contract variable and feeding back the read value to the Ethereum virtual machine instance.

9. The method of claim 3, wherein a blockchain write interface in the blockchain access interface comprises at least one of:
a contract account creation interface;
a contract bytecode initialization interface;
a contract account deletion interface;
an intra-contract variable storage interface;
an account balance increase interface; or
an account balance decrease interface.

10. The method of claim 9,
wherein in the process of executing the to-be-processed transaction request, generating (S120), by the Ethereum virtual machine instance, the data access request in the form of the Ethereum Virtual Machine instruction for the target access data and transmitting the data access request to the interface module comprises: in the process of executing the to-be-processed transaction request, generating, by the Ethereum virtual machine instance, an intra-contract variable storage request and transmitting the intra-contract variable storage request to the interface module; wherein calling (S 140), by the interface module, the blockchain access interface to access the data storage space of the non-Ethereum blockchain system where the target access data is located comprises: calling, by the interface module, the intra-contract variable storage interface for the contract space to write a value of an intra-contract variable;
wherein in the process of executing the to-be-processed transaction request, generating (S120), by the Ethereum virtual machine instance, the data access request in the form of the Ethereum Virtual Machine instruction for the target access data and transmitting the data access request to the interface module comprises: in response to identifying the to-be-processed transaction request as a contract account creation request based on the contract account, transmitting, by the Ethereum virtual machine instance, the contract account creation request to the interface module; wherein calling (S140), by the interface module, the blockchain access interface to access the data storage space of the non-Ethereum blockchain system where the target access data is located comprises: calling, by the interface module, the contract account creation interface according to the contract account creation request, creating a new contract account in the account space, and writing account data of the newly-created contract account; in a process of executing the contract account creation interface, calling, by the interface module, the contract bytecode initialization interface to compile a smart contract to be created, form a contract bytecode, and write the contract bytecode into the contract space; and in the process of executing the contract account creation interface, calling, by the interface module, the intra-contract variable storage interface, and creating and storing an intra-contract variable of the smart contract in the contract space; and
wherein in the process of executing the to-be-processed transaction request, generating (S120), by the Ethereum virtual machine instance, the data access request in the form of the Ethereum Virtual Machine instruction for the target access data and transmitting the data access request to the interface module comprises: in response to identifying the to-be-processed transaction request as a contract account deletion request based on the contract account, transmitting, by the Ethereum virtual machine instance, the contract account deletion request to the interface module; wherein calling (S140), by the interface module, the blockchain access interface to access the data storage space of the non- Ethereum blockchain system where the target access data is located comprises: calling, by the interface module, the contract account deletion interface according to the contract account deletion request, deleting account data of a to-be-deleted contract account in the account space, and deleting contract data of the to-be-deleted contract account in the contract space.

11. The method of claim 2, further comprising:
after the Ethereum virtual machine instance executes the to-be-processed transaction request, calling the blockchain access interface and updating on-chain data of the non-Ethereum blockchain system according to an intra-contract variable in the contract space.

12. An Ethereum Virtual Machine-based transaction processing apparatus (600), the apparatus being applied to a non-Ethereum blockchain node of a non-Ethereum blockchain system comprising:
a to-be-processed transaction request acquisition module (610), which is configured to cause a Ethereum virtual machine instance running in the non-Ethereum blockchain node to acquire a to-be-processed transaction request;
a data access request generation and transmission module (620), which is configured to cause the Ethereum virtual machine instance to: in a process of executing the to-be-processed transaction request, generate a data access request in a form of an Ethereum Virtual Machine instruction for target access data and transmit the data access request to an interface module, wherein the data access request comprises a data read request and/or a data write request;
an instruction conversion module (630), which is configured to cause the interface module to perform instruction conversion according to the data access request to determine a blockchain access interface corresponding to a function of the data access request; and
a blockchain access interface calling module (640), which is configured to cause the interface module to call the blockchain access interface to access a data storage space of the non- Ethereum blockchain system where the target access data is located and feed an access result back to the Ethereum virtual machine instance;
wherein the target access data comprises account data and/or contract data, the contract data comprises an account identifier, a contract bytecode and an intra-contract variable, and the account identifier is a contract call identifier of a smart contract.

13. An electronic device, comprising:
at least one processor; and
a memory communicatively connected to the at least one processor;
wherein the memory stores an instruction executable by the at least one processor, and the instruction is executed by the at least one processor to enable the at least one processor to perform the method of any one of claims 1 to 11.

14. A non-transitory computer-readable storage medium storing a computer instruction, wherein the computer instruction is configured to cause a computer to perform the method of any one of claims 1 to 11.

15. A computer program product, wherein comprising a computer program which, when executed by a processor, implements the method of any one of claims 1 to 11.

## Patentansprüche

1. Verfahren zur Transaktionsverarbeitung auf der Basis einer virtuellen Ethereum-Maschine, wobei das Verfahren auf einen Nicht-Ethereum-Blockchain-Knoten eines Nicht-Ethereum-Blockchain-Systems angewendet wird, umfassend:
Erfassen (S110) einer zu verarbeitenden Transaktionsanfrage durch eine Instanz einer virtuellen Ethereum-Maschine, die auf einem Nicht-Ethereum-Blockchain-Knoten läuft;
in einem Prozess des Ausführens der zu bearbeitenden Transaktionsanfrage, Erzeugen (S120) einer Zugangsanfrage in Form einer Anweisung der virtuellen Ethereum-Maschine für Zielzugangsdaten und Senden der Zugangsanfrage an eine Schnittstelle, wobei die Zugangsanfrage eine Ableseanfrage für Daten und/oder eine Schreibanfrage für Daten umfasst;
Ausführen (S130) einer Anweisungsumwandlung nach der Datenzugangsanfrage durch das Schnittstellenmodul, um eine Blockchain-Zugangsschnittstelle zu bestimmen, die einer Funktion der Datenzugangsanfrage entspricht; und
Aufrufen (S140) der Blockchain-Zugangsschnittstelle durch das Bestimmungsmodul, um auf einen Datenspeicher des Nicht-Ethereum-Blockchain-Systems zuzugreifen, in dem sich die Zielzugangsdaten befinden, und Zurückführen eines Zugangsergebnisses an die Instanz der virtuellen Ethereum-Maschine;
wobei die Zielzugangsdaten Kontodaten und/oder Vertragsdaten umfassen, die Vertragsdaten einen Kontoidentifikator, einen Vertragsbytecode und eine vertragsinterne Variable umfassen und der Kontoidentifikator ein Vertragsaufrufidentifikator eines intelligenten Vertrags ist.

2. Verfahren nach Anspruch 1, wobei der Datenspeicherraum des Nicht-Ethereum-Blockchain-Systems einen Kontoraum und einen Vertragsraum umfasst, der Kontoraum zum Speichern von Kontodaten in einem externen Konto und von Kontodaten in einem Vertragskonto verwendet wird und der Vertragsraum zum Speichern von Vertragsdaten im Vertragskonto verwendet wird; und
wobei der Datenspeicherraum des Nicht-Ethereum-Blockchain-Systems zur Unterstützung von Operationen auf Daten in mindestens zwei Typen von Konten verwendet wird und die Kontodaten in jedem der Konten dieselbe Datenstruktur verwenden.

3. Verfahren nach Anspruch 2, wobei eine Kategorie der Blockchain-Zugangsschnittstelle eine Kontozugangsschnittstelle, eine Speicherzugangsschnittstelle und eine Vertragsoperationsschnittstelle umfasst; und
wobei die Kontozugangsschnittstelle für den Zugang zu den Kontodaten verwendet wird, die Vertragsoperationsschnittstelle für die Operation des Vertragskontos verwendet wird und die Speicherzugangsschnittstelle für die Aktualisierung der Vertragsdaten verwendet wird.

4. Verfahren nach Anspruch 1, wobei das Ausführen (S130) der Anweisungsumwandlung nach der Datenzugangsanfrage durch das Bestimmungsmodul, um die Blockchain-Zugangsschnittstelle zu bestimmen, die der Funktion der Datenzugangsanfrage entspricht, umfasst:
Identifizieren einer Anweisung der virtuellen Maschine, zu der die Datenzugangsanfrage gehört, und eines Anweisungsparameters durch das Bestimmungsmodul; und
Bestimmen der Blockchain-Zugangsschnittstelle, die der Datenzugangsanfrage entspricht, durch das Bestimmungsmodul nach einer voreingestellten Abbildung zwischen Anfragen der virtuellen Maschine und Schnittstellen.

5. Verfahren nach Anspruch 3, wobei eine Blockchain-Leseschnittstelle in der Blockchain-Zugangsschnittstelle mindestens eines der folgenden Elemente umfasst:
eine vertragsinterne variable Leseschnittstelle;
eine Leseschnittstelle für den Kontostand von Token;
eine Leseschnittstelle für Vertragsbytecode;
eine Schnittstelle zur Ablesung einer Geschäftssequenznummer eines Kontos;
eine On-Chain-Schnittstelle für Vertragsabfragen;
eine On-Chain-Schnittstelle zur Kontoabfrage; oder
eine Leseschnittstelle zum Ablesen eines Hashes eines Blocks nach einer Höhe des Blocks.

6. Verfahren nach Anspruch 5, wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst:
als Antwort auf das Erfassen der zu verarbeitenden Transaktionsanfrage, Erfassen eines Vertragsidentifikators und eines aufzurufenden Vertragsidentifikators in der zu verarbeitenden Transaktionsanfrage durch die Instanz der virtuellen Ethereum-Maschine; und
Erzeugen einer On-Chain-Kontoabfrage und einer On-Chain-Vertragsabfrage eines Anrufers nach dem Vertragsidentifikator des Anrufers bzw. des aufzurufenden Vertragsidentifikators durch die virtuelle Ethereum-Maschine und Senden der On-Chain-Kontoabfrage und der On-Chain-Vertragsabfrage an das Schnittstellenmodul;
wobei das Aufrufen (S140) der Blockchain-Zugangsschnittstelle durch das Bestimmungsmodul, um auf einen Datenspeicherraum des Nicht-Ethereum-Blockchain-Systems zuzugreifen, in dem sich die Zielzugangsdaten befinden, und das Rückführen des Zugangsergebnisses an die Instanz der virtuellen Maschine umfasst:
Aufrufen der On-Chain-Schnittstelle für die Kontenabfrage für den Kontoraum durch das Bestimmungsmodul, um abzufragen, ob ein Konto des Vertragspartners in einer Kette existiert;
Aufrufen der On-Chain-Schnittstelle zur Vertragsabfrage für den Vertragsraum durch das Bestimmungsmodul, um abzufragen, ob ein aufzurufender Vertrag in der Kette existiert; und
Zurückführen eines Abfrageergebnisses sowohl des Kontos des Vertragsaufrufers als auch des aufzurufenden Vertrags durch das Bestimmungsmodul an die Instanz der virtuellen Ethereum-Maschine.

7. Verfahren nach Anspruch 6, wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst:
als Antwort auf das Erfassen des vom Schnittstellenmodul zurückgemeldeten Abfrageergebnisses, dass ein On-Chain-Konto und ein On-Chain-Vertrag existieren, Erzeugen einer Ableseanfrage für den Vertragsbytecode nach dem aufzurufenden Vertragsidentifikator durch die Instanz der virtuellen Ethereum-Maschine und Übertragen der Ableseanfrage für den Vertragsbytecode an das Schnittstellenmodul; und
wobei das Aufrufen (S140) der Blockchain-Zugangsschnittstelle durch das Bestimmungsmodul, um auf den Datenspeicherraum des Nicht-Ethereum-Blockchain-Systems zuzugreifen, in dem sich die Zielzugangsdaten befinden, und das Zurückführen des Zugangsergebnisses an die Instanz der virtuellen Ethereum-Maschine umfasst:
Aufrufen der Leseschnittstelle für den Vertragsraum durch das Bestimmungsmodul, um einen Vertragsbytecode des aufzurufenden Vertrags zu lesen, und Zuführen des gelesenen Vertragsbytecodes an die Instanz der virtuellen Ethereum-Maschine.

8. Verfahren nach Anspruch 7, wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst:
Ausführen der zu bearbeitenden Transaktionsanfrage durch die virtuelle Ethereum-Maschine-Instanz nach dem von dem Bestimmungsmodul zurückgemeldeten Vertragsbytecode und einem Vertragsparameter und einem Token in der zu bearbeitenden Transaktionsanfrage und Erzeugen einer vertragsinternen Ableseanfrage und Senden der vertragsinternen Ableseanfrage an das Bestimmungsmodul während des Prozesses der Ausführung der zu bearbeitenden Transaktionsanfrage;
wobei das Aufrufen (S140) der Blockchain-Zugangsschnittstelle durch das Bestimmungsmodul, um auf den Datenspeicherraum des Nicht-Ethereum-Blockchain-Systems zuzugreifen, in dem sich die Zielzugangsdaten befinden, und das Rückführen des Zugangsergebnisses an die Instanz der virtuellen Maschine umfasst:
Aufrufen der Leseschnittstelle für vertragsinterne Variablen durch das Bestimmungsmodul für den vertragsinternen Raum, um einen Wert einer vertragsinternen Variablen zu lesen und den gelesenen Wert an die Instanz der virtuellen Ethereum-Maschine zurückzuführen.

9. Verfahren nach Anspruch 3, wobei eine Blockchain-Schreibschnittstelle in der Blockchain-Zugangsschnittstelle mindestens eines der folgenden Elemente umfasst:
eine Schnittstelle zur Erstellung von Vertragskonten;
eine Schnittstelle zur Initialisierung des Vertragsbytecodes;
eine Schnittstelle für die Löschung von Vertragskonten;
eine vertragsinterne Schnittstelle für variable Speicherung;
eine Schnittstelle für die Erhöhung des Kontostands; oder
eine Schnittstelle für die Verringerung des Kontostands.

10. Verfahren nach Anspruch 9, wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst: im Prozess der Ausführung der zu verarbeitenden Transaktionsanfrage, das Erzeugen, durch die Instanz der virtuellen Ethereum-Maschine, einer vertragsinternen Anfrage zur variablen Speicherung und das Senden der vertragsinternen Anfrage zur variablen Speicherung an das Schnittstellenmodul;
wobei das Aufrufen (S140) der Blockchain-Zugangsschnittstelle durch das Bestimmungsmodul zum Zugriff auf den Raum der Datenspeicherung des Nicht-Ethereum-Blockchain-Systems, in dem sich die Zielzugangsdaten befinden, umfasst: Aufrufen der vertragsinternen Schnittstelle zur variablen Speicherung im Raum des Vertrags durch das Bestimmungsmodul, um einen Wert einer vertragsinternen Variablen zu schreiben;
wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst: Als Antwort auf das Identifizieren der zu verarbeitenden Transaktionsanfrage als eine auf dem Vertragskonto basierende Vertragskontoerstellungsanfrage, Senden der Vertragskontoerstellungsanfrage durch die Instanz der virtuellen Ethereum-Maschine an das Schnittstellenmodul; wobei das Aufrufen (S140) der Blockchain-Zugangsschnittstelle durch das Bestimmungsmodul zum Zugriff auf den Raum der Datenspeicherung des Nicht-Ethereum-Blockchain-Systems, in dem sich die Zielzugangsdaten befinden, umfasst: Aufrufen der Schnittstelle zur Erstellung eines Vertragskontos nach der Anforderung zur Erstellung eines Vertragskontos durch das Bestimmungsmodul, Erstellen eines neuen Vertragskontos im Raum des Kontos und Schreiben von Kontodaten des neu erstellten Vertragskontos; in einem Prozess des Ausführens der Schnittstelle zur Erstellung eines Vertragskontos, Aufrufen der Schnittstelle zur Initialisierung des Vertragsbytecodes durch das Schnittstellenmodul, um einen zu erstellenden intelligenten Vertrag zu kompilieren, einen Vertragsbytecode zu bilden und den Vertragsbytecode in den Raum des Vertrags zu schreiben; und während des Prozesses der Ausführung der Schnittstelle zur Erstellung eines Vertragskontos durch das Schnittstellenmodul die Schnittstelle zur Speicherung von vertragsinternen Variablen aufruft und eine vertragsinterne Variable des intelligenten Vertrags im Raum des Vertrags erstellt und speichert; und
wobei das Erzeugen (S120) der Datenzugangsanfrage in Form der Anweisung der virtuellen Ethereum-Maschine für die Zielzugangsdaten und das Übertragen der Datenzugangsanfrage an das Bestimmungsmodul im Prozess der Ausführung der zu verarbeitenden Transaktionsanfrage durch die Instanz der virtuellen Ethereum-Maschine umfasst: Als Antwort auf das Identifizieren der zu verarbeitenden Transaktionsanfrage als eine auf dem Vertragskonto basierende Anfrage zur Löschung des Vertragskontos, das Senden der Anfrage zur Löschung des Vertragskontos durch die Instanz der virtuellen Ethereum-Maschine an das Schnittstellenmodul; wobei das Aufrufen (S140) der Blockchain-Zugangsschnittstelle durch das Bestimmungsmodul zum Zugriff auf den Raum der Datenspeicherung des Nicht-Ethereum-Blockchain-Systems, in dem sich die Zielzugangsdaten befinden, umfasst: Aufrufen der Schnittstelle für die Löschung von Vertragskonten durch das Bestimmungsmodul nach der Anfrage zur Löschung von Vertragskonten, Löschen von Daten eines zu löschenden Vertragskontos im Raum für Konten und Löschen von Vertragsdaten des zu löschenden Vertragskontos im Raum für Verträge.

11. Verfahren nach Anspruch 2, ferner umfassend:
nachdem die Instanz der virtuellen Ethereum-Maschine die zu verarbeitende Transaktionsanfrage ausgeführt hat, Aufrufen der Blockchain-Zugangsschnittstelle und Aktualisieren der On-Chain-Daten des Nicht-Ethereum-Blockchain-Systems nach einer vertragsinternen Variablen im Vertragsraum.

12. Gerät zur Transaktionsverarbeitung auf der Basis einer virtuellen Ethereum-Maschine (600), wobei das Gerät auf einen Nicht-Ethereum-Blockchain-Knoten eines Nicht-Ethereum-Blockchain-Systems angewendet wird, umfassend:
ein Bestimmungsmodul (610) für eine zu verarbeitende Transaktionsanfrage, das so konfiguriert ist, dass es eine Instanz einer virtuellen Ethereum-Maschine, die in dem Nicht-Ethereum-Blockchain-Knoten läuft, veranlasst, eine zu verarbeitende Transaktionsanfrage zu erfassen;
ein Bestimmungsmodul (620) zur Erzeugung und Übertragung von Datenzugangsanfragen, das konfiguriert ist, die Instanz der virtuellen Ethereum-Maschine zum Folgendem zu veranlassen: In einem Prozess des Ausführens der zu verarbeitenden Transaktionsanfrage, Erzeugen einer Datenzugangsanfrage in Form einer Anweisung der virtuellen Ethereum-Maschine für Zielzugangsdaten und Übertragen der Datenzugangsanfrage an ein Schnittstellenmodul, wobei die Datenzugangsanfrage eine Ableseanfrage und/oder eine Schreibanfrage umfasst;
ein Anweisungsumwandlungsmodul (630), das so konfiguriert ist, dass es das Schnittstellenmodul veranlasst, eine Anweisungsumwandlung nach der Datenzugangsanfrage auszuführen, um eine Blockchain-Zugangsschnittstelle zu bestimmen, die einer Funktion der Datenzugangsanfrage entspricht; und
ein Aufrufmodul (640) für die Blockchain-Zugangsschnittstelle, das so konfiguriert ist, dass es das Schnittstellenmodul veranlasst, die Blockchain-Zugangsschnittstelle aufzurufen, um auf einen Datenspeicher des Nicht-Ethereum-Blockchain-Systems zuzugreifen, in dem sich die Zielzugangsdaten befinden, und ein Zugangsergebnis zurück an die Instanz der virtuellen Ethereum-Maschine zu senden;
wobei die Zielzugangsdaten Kontodaten und/oder Vertragsdaten umfassen, die Vertragsdaten einen Kontoidentifikator, einen Vertragsbytecode und eine vertragsinterne Variable umfassen und der Kontoidentifikator ein Vertragsaufrufidentifikator eines intelligenten Vertrags ist.

13. Elektronische Vorrichtung, umfassend:
mindestens einen Prozessor; und
einen Speicher, der kommunikativ mit mindestens einem Prozessor verbunden ist;
wobei der Speicher eine Anweisung speichert, die von dem mindestens einen Prozessor ausgeführt werden kann, und die Anweisung von dem mindestens einen Prozessor ausgeführt wird, um dem mindestens einen Prozessor zu ermöglichen, das Verfahren nach einem der Ansprüche 1 bis 11 auszuführen.

14. Nicht-übertragbares computerlesbares Speichermedium, das eine Computeranweisung speichert, wobei die Computeranweisung so konfiguriert ist, dass sie einen Computer veranlasst, das Verfahren nach einem der Ansprüche 1 bis 11 auszuführen.

15. Computerprogrammprodukt, wobei es ein Computerprogramm umfasst, das, wenn es von einem Prozessor ausgeführt wird, das Verfahren nach einem der Ansprüche 1 bis 11 implementiert.

## Revendications

1. Une méthode de traitement de transactions basée sur la machine virtuelle Ethereum, la méthode étant appliquée à un noeud de blockchain non-Ethereum d'un système de blockchain non-Ethereum comprenant :
l'acquisition (S110), par une instance de machine virtuelle Ethereum s'exécutant dans le noeud de blockchain non Ethereum, d'une demande de transaction à traiter ;
au cours du processus d'exécution de la demande de transaction à traiter, générer (S120), par l'intermédiaire de l'instance de machine virtuelle Ethereum, une requête d'accès aux données sous la forme d'une instruction de machine virtuelle Ethereum pour les données d'accès cible et la transmission de la requête d'accès aux données à un module d'interface,
dans lequel la requête d'accès aux données comprend une requête de lecture de données et/ou une requête d'écriture de données ;
effectuer (S130), par le module d'interface, une conversion d'instructions en fonction de la requête d'accès aux données afin de déterminer une interface d'accès à la blockchain correspondant à une fonction de la requête d'accès aux données ; et
appeler (S140), par le module d'interface, l'interface d'accès à la blockchain pour accéder à un stockage de données du système de blockchain non-Ethereum où se trouvent les données d'accès cible et de renvoyer un résultat d'accès à l'instance de machine virtuelle Ethereum ;
dans lequel les données d'accès cible comprennent des données de compte et/ou des données de contrat, les données de contrat comprend un identifiant de compte, un pseudo-code de contrat et une variable intra-contrat, et l'identifiant de compte est un identifiant d'appel de contrat d'un automate exécuteur de clauses.

2. Méthode selon revendication 1, dans laquelle l'espace de stockage de données du système de blockchain non-Ethereum comprend un espace de compte et un espace de contrat, l'espace de compte étant utilisé pour stocker des données de compte dans un compte externe et des données de compte dans un compte de contrat, et l'espace de contrat étant utilisé pour stocker des données de contrat dans le compte de contrat ; et
dans lequel l'espace de stockage de données du système de blockchain non-Ethereum est utilisé pour prendre en charge des opérations sur les données dans au moins deux types de comptes, et les données de compte de chacun des comptes utilisent la même structure de données.

3. Méthode selon la revendication 2, dans laquelle une catégorie de l'interface d'accès à la blockchain comprend une interface d'accès au compte, une interface d'accès au stockage et une interface d'opération de contrat ; et dans laquelle l'interface d'accès au compte est utilisée pour accéder aux données du compte, l'interface d'opération de contrat est utilisée pour gérer le compte de contrat, et l'interface d'accès au stockage est utilisée pour la mise à jour des données de contrat.

4. Méthode selon la revendication 1, dans laquelle l'exécution (S130), par le module d'interface, de la conversion d'instruction en fonction de la requête d'accès aux données pour déterminer l'interface d'accès à la blockchain correspondant à la fonction de la requête d'accès aux données comprend :
identifier, par le module d'interface, une instruction de machine virtuelle à laquelle appartient la requête d'accès aux données et un paramètre d'instruction ; et
déterminer, par le module d'interface, l'interface d'accès à la blockchain correspondant à la requête d'accès aux données selon une relation de mappage prédéfinie entre des instructions de la machine virtuelle et des interfaces.

5. Méthode selon la revendication 3, dans laquelle une interface de lecture de la blockchain dans l'interface d'accès à la blockchain comprend au moins l'un des éléments suivants :
une interface de lecture de variables intra-contrat ;
une interface de lecture d'un solde de jetons de compte ;
une interface de lecture du pseudo-code de contrat ;
une interface pour lire un numéro de séquence d'accord d'un compte ;
une interface d'interrogation de contrat sur la chaîne ;
une interface d'interrogation de compte sur la chaîne ; ou
une interface de lecture pour lire un hachage d'un bloc en fonction de la hauteur du bloc.

6. Méthode selon la revendication 5, dans laquelle, au cours du processus d'exécution de la transaction à traiter demande, générer (5120), par l'instance de machine virtuelle Ethereum, la requête d'accès aux données sous la forme de l'instruction de machine virtuelle Ethereum pour les données d'accès cibles et transmettre la requête d'accès aux données au module d'interface comprend :
en réponse à l'acquisition de la demande de transaction à traiter, l'acquisition, par l'instance de machine virtuelle Ethereum, d'un identifiant d'appelant de contrat et d'un identifiant de contrat à appeler dans la requête de transaction à traiter ; et
générer, par l'instance de machine virtuelle Ethereum, une requête d'interrogation de compte sur la chaîne et une requête d'interrogation de contrat sur la chaîne d'un appelant en fonction de l'identifiant de l'appelant du contrat et l'identifiant du contrat à appeler, respectivement, et transmettre la requête d'interrogation du compte sur la chaîne et la requête d'interrogation du contrat sur la chaîne au module d'interface ;
dans lequel l'appel (S140), par le module d'interface, de l'interface d'accès à la blockchain pour accéder à un espace de stockage de données du système de blockchain non-Ethereum dans lequel se trouvent les données d'accès cibles et le renvoi du résultat de l'accès à l'instance de machine virtuelle comprend :
appeler, par le module d'interface, l'interface d'interrogation du compte sur la chaîne pour l'espace de compte afin d'interroger si un compte d'appelant de contrat existe sur la chaîne ;
appeler, par le module d'interface, l'interface d'interrogation de contrat sur la chaîne pour l'espace de contrat afin de demander si un contrat à appeler existe sur la chaîne ; et
renvoyer, par le module d'interface, une résultat d'interrogation portant sur chacun du compte de l'appelant du contrat et du contrat à appeler à l'instance de machine virtuelle Ethereum.

7. Méthode selon la revendication 6, dans lequel, au cours du processus d'exécution de la requête de transaction à traiter, la génération (S120), par l'instance de machine virtuelle Ethereum, de la requête d'accès aux données sous la forme de l'instruction de machine virtuelle Ethereum pour les données d'accès cibles et la transmission de la requête d'accès aux données au module d'interface comprend :
en réponse à l'acquisition du résultat d'interrogation renvoyé par le module d'interface selon lequel un compte sur la chaîne et un contrat sur la chaîne existent, générer, par l'instance de machine virtuelle Ethereum, une demande de lecture de pseudo-code de contrat en fonction de l'identifiant de contrat à appeler et transmettre la requête de lecture de pseudo-code de contrat au module d'interface ; et
dans lequel appeller (S140), par le module d'interface, l'interface d'accès à la blockchain pour accéder à l'espace de stockage de données du système de blockchain non-Ethereum où les données d'accès cibles sont situées et le renvoi du résultat de l'accès à l'instance de machine virtuelle Ethereum comprend :
appeler, par le module d'interface, l'interface de lecture du pseudo-code de contrat pour que l'espace de contractuel lise un pseudo-code du contrat à appeler et renvoyer le pseudo-code de contrat lu au module d'interface de l'instance de machine virtuelle Ethereum.

8. Méthode selon la revendication 7, dans lequel, dans le processus d'exécution de la demande de transaction à traiter, la génération (S120), par l'instance de machine virtuelle Ethereum, de la requête d'accès aux données sous la forme de l'instruction de machine virtuelle Ethereum pour les données d'accès cibles et la transmission de la requête d'accès aux données au module d'interface comprend :
l'exécution, par l'instance de machine virtuelle Ethereum, de la requête de transaction à traiter en fonction du pseudo-code de contrat renvoyé par le module d'interface, d'un paramètre de contrat et d'un jeton dans la requête de transaction à traiter, et au cours du processus d'exécution de la requête de transaction à traiter, générer une requête de lecture de variable intra-contrat et transmettre la requête de lecture de variable intra-contrat au module d'interface ;
dans lequel l'appel (S140), par le module d'interface, de l'interface d'accès à la blockchain pour accéder à l'espace de stockage de données du système de blockchain non-Ethereum où les données d'accès cibles sont situées et le renvoi du résultat de l'accès à l'instance de machine virtuelle comprend :
appeler, par le module d'interface, l'interface de lecture de la variable intra-contrat pour l'espace de contrat afin de lire une valeur d'une variable intra-contrat et renvoyer la valeur lue à l'instance de machine virtuelle Ethereum.

9. Méthode selon la revendication 3, dans laquelle une interface d'écriture de la blockchain dans l'interface d'accès à la blockchain comprend au moins l'un des éléments suivants :
une interface de création de compte de contrat;
une interface d'initialisation de pseudocode de contrat ;
une interface de suppression de compte de contrat ;
une interface de stockage de variables intra-contrat ;
une interface d'augmentation de solde de compte ; ou
une interface de diminution de solde de compte.

10. Méthode selon la revendication 9,
dans lequel, dans le processus d'exécution de la requête de transaction à traiter, la génération (S120), par l'instance de machine virtuelle Ethereum, de la requête d'accès aux données sous la forme de l'instruction de machine virtuelle Ethereum pour les données d'accès cibles et la transmission de la requête d'accès aux données au module d'interface comprend : dans le processus d'exécution de la requête de transaction à traiter, la génération, par l'instance de machine virtuelle Ethereum, d'une requête de stockage de variable intra-contrat et la transmission de la requête de stockage de variable intra-contrat au module d'interface ;
dans lequel l'appel (S140), par le module d'interface, de l'interface d'accès à la blockchain pour accéder à l'espace de stockage de données du système de blockchain non-Ethereum où se trouvent les données d'accès cibles comprend : l'appel, par le module d'interface, de l'interface de stockage de variable intra-contrat pour l'espace de contrat afin d'écrire une valeur d'une variable intra-contrat ;
dans lequel, dans le processus d'exécution de la requête de transaction à traiter, la génération (S120), par l'instance de machine virtuelle Ethereum, de la requête d'accès aux données sous la forme de l'instruction de machine virtuelle Ethereum pour les données d'accès cibles et la transmission de la requête d'accès aux données au module d'interface comprend : en réponse à l'identification de la requête de transaction à traiter en tant que requête de création de compte de contrat basée sur le compte de contrat, transmettre, par l'instance de machine virtuelle Ethereum, la requête de création de compte de contrat au module d'interface ; dans lequel l'appel (S140), par le module d'interface, de l'interface d'accès à la blockchain pour accéder à l'espace de stockage de données du système de blockchain non-Ethereum où se trouvent les données d'accès cibles comprend : l'appel, par le module d'interface, de l'interface de création de compte de contrat en fonction de la requête de création de compte, la création d'un nouveau compte de contrat dans l'espace de compte, et écriture de données de compte du compte de contrat nouvellement créé ; dans un processus d'exécution de l'interface de création de compte de contrat, appel, par le module d'interface, de l'interface d'initialisation de pseudo-code de contrat pour compiler un automate exécuteur de clauses à créer, former un pseudo-code de contrat, et écrire le pseudo-code de contrat dans l'espace de contrat ; et dans un processus d'exécution de la création de compte de contrat, appeler, par le module d'interface, l'interface de stockage de variable intra-contrat, et créer et stocker une variable intra-contrat de l'automate exécuteur de clauses dans l'espace de contrat ; et
dans lequel, au cours du processus d'exécution de la demande de transaction à traiter, la génération (S120), par l'instance de machine virtuelle Ethereum, de la requête d'accès aux données sous la forme de l'instruction de machine virtuelle Ethereum pour les données d'accès cibles et la transmission de la requête d'accès aux données au module d'interface comprend : en réponse à l'identification de la requête de transaction à traiter comme une requête de suppression de compte de contrat basée sur le compte de contrat, la transmission, par l'instance de machine virtuelle Ethereum, de la requête de suppression de compte de contrat au module d'interface ; dans lequel l'appel (S140), par le module d'interface, de l'interface d'accès à la blockchain pour accéder à l'espace de stockage de données du système de blockchain non Ethereum où les données d'accès cibles sont situées comprend :
appeler, par le module d'interface, l'interface de suppression de compte de contrat conformément à la requête de suppression de compte de contrat, supprimer les données de compte d'un compte de contrat à supprimer dans l'espace de compte, et supprimer les données de contrat du compte de contrat à supprimer dans l'espace de contrat.

11. Méthode selon la revendication 2, comprenant en outre :
après que l'instance de machine virtuelle Ethereum a exécuté la requête de transaction à traiter, appeler l'interface d'accès à la blockchain et mettre à jour les données sur la chaîne du système de blockchain non-Ethereum en fonction d'une variable intra-contrat dans l'espace de contrat.

12. Appareil de traitement de transactions basé sur une machine virtuelle Ethereum (600), l'appareil étant appliquée à un noeud de blockchain non-Ethereum d'un système de blockchain non-Ethereum et comprenant :
un module d'acquisition de requête de transaction à traiter (610), configuré pour amener une instance de machine virtuelle Ethereum fonctionnant dans le noeud de blockchain non Ethereum à acquérir une requête de transaction à traiter ;
un module de génération et de transmission de demandes d'accès aux données (620), qui est configuré pour faire en sorte que l'instance de machine virtuelle Ethereum génère, dans un processus d'exécution de la requête de transaction à traiter, une requête d'accès aux données sous la forme d'une instruction de machine virtuelle Ethereum pour des données d'accès cibles et transmette la demande d'accès aux données à un module d'interface, la requête d'accès aux données comprenant une requête de lecture de données et/ou une requête d'écriture de données ;
un module de conversion d'instructions (630), configuré pour amener le module d'interface à effectuer une conversion d'instruction en fonction de la requête d'accès aux données afin de déterminer une interface d'accès à la blockchain correspondant à une fonction de la requête d'accès aux données ; et
un module (640) d'appel de l'interface d'accès à la blockchain, configuré pour faire en sorte que le module d'interface appelle l'interface d'accès à la blockchain afin d'accéder à un espace de stockage de données du système de blockchain non Ethereum dans lequel se trouvent les données d'accès cibles et renvoyer un résultat d'accès au module d'accès à la blockchain.
dans lequel les données d'accès cibles comprennent des données de compte et/ou des données de contrat, les données de contrat comprennent un identifiant de compte, un pseudo-code de contrat et une variable intra-contrat, et l'identifiant de compte est un identifiant d'appel de contrat d'un automate exécuteur de clauses.

13. Un appareil électronique, comprenant
au moins un processeur ; et
une mémoire connectée de manière communicative à l'au moins un processeur ;
dans lequel la mémoire stocke une instruction exécutable par l'au moins un processeur, et le est exécutée par l'au moins un processeur pour permettre à l'au moins un processeur d'exécuter la méthode selon l'une des revendications 1 à 11.

14. Un support de stockage non transitoire lisible par ordinateur stockant une instruction informatique, dans lequel l'instruction informatique est configurée pour amener un ordinateur à exécuter la méthode de l'une des revendications 1 à 11.

15. Produit programme d'ordinateur, dans lequel comprenant un programme d'ordinateur qui, lorsque exécuté par un processeur, met en oeuvre la méthode selon l'une des revendications 1 à 11.
